# EUROPÄISCHE PATENTSCHRIFT

(11) **EP 3 344 097 B1**
(45) Veröffentlichungstag und Bekanntmachung des Hinweises auf die Patenterteilung: **25.11.2026**
(21) Anmeldenummer: 16760684.7
(22) Anmeldetag: 29.08.2016
(51) Int. Cl.: A47J 31/40

(54) **VORRICHTUNG UND VERFAHREN ZUR ZUBEREITUNG EINES GETRÄNKS, INSBESONDERE ZUR ZUBEREITUNG EINES PROTEINHALTIGEN MISCHGETRÄNKS**
DEVICE AND METHOD FOR PREPARING A BEVERAGE, IN PARTICULAR FOR PREPARING A PROTEIN-CONTAINING MIXED BEVERAGE
DISPOSITIF ET PROCÉDÉ DE PRÉPARATION D'UNE BOISSON, EN PARTICULIER DE PRÉPARATION D'UNE BOISSON MÉLANGÉE CONTENANT DES PROTÉINES

(30) Priorität: 01.09.2015 DE 202015006170 U; 04.11.2015 DE 202015007626 U; 05.02.2016 DE 202016000769 U; 24.05.2016 DE 202016003314 U
(43) Veröffentlichungstag der Anmeldung: 11.07.2018
(73) Patentinhaber: Bodyshake GmbH, 08064 Zwickau (DE)
(72) Erfinder: RATZOW, Daniel, 08056 Zwickau (DE); HACHENBERGER, Steve, 08056 Zwickau (DE)
(74) Vertreter: Wallinger, Michael
(86) Internationale Anmeldenummer: PCT/EP2016/070300
(87) Internationale Veröffentlichungsnummer: WO 2017/037008

(56) Entgegenhaltungen:
- EP-A1- 1 852 044
- EP-A1- 2 011 421
- WO-A1-2013/124188
- WO-A1-2013/131722
- US-A1- 2004 071 841
- US-A1- 2011 121 017
- US-A1- 2013 112 081

## Beschreibung

Die vorliegende Erfindung betrifft eine Vorrichtung zur Bevorratung und Zuführung eines rieselfähigen Substrats, welche insbesondere in einer Vorrichtung zur Zubereitung eines Getränks, insbesondere zur Zubereitung eines proteinhaltigen Mischgetränks, Verwendung findet. Weiterhin betrifft die vorliegende Erfindung ein Verfahren zur Montage einer Vorrichtung zur Bevorratung und Zuführung eines rieselfähigen Substrats und zum Einbau derselben in eine Vorrichtung zur Zubereitung eines Getränks, insbesondere zur Zubereitung eines proteinhaltigen Mischgetränks.

Bei der Entwicklung einer solchen Vorrichtung zur Zubereitung eines Getränks, insbesondere zur Zubereitung eines proteinhaltigen Mischgetränks, wie zum Beispiel einem Getränkeautomaten, bewegt man sich stets in einem Spannungsfeld zwischen Produktvielfalt, Getränkequalität, Hygieneanforderungen, Wartungsfreundlichkeit, (möglichst langen) Wartungsintervallen, Verfügbarkeit und Wirtschaftlichkeit. Insbesondere hinsichtlich der Hygieneanforderungen sollen höchste Anforderungen erfüllt werden.

Eine Vorrichtung zur Zubereitung eines proteinhaltigen Mischgetränks, wie sie beispielsweise häufig in Fitness-Studios anzutreffen ist, soll je nach Vorliebe des Sportlers proteinhaltige Mischgetränke unterschiedlicher Geschmacksrichtungen bereitstellen können. Dies wird aktuell häufig so realisiert, dass für jede Geschmacksrichtung ein rieselfähiges Substrat bereitgestellt wird, welches nach Wunsch des Sportlers mit Wasser vermischt und ausgegeben wird. Aufgrund des begrenzten Bauraums innerhalb eines Getränkeautomaten kann dies zu Defiziten bei Produktvielfalt, Wartungsfreundlichkeit, Wartungsintervallen, Verfügbarkeit und/oder Wirtschaftlichkeit führen. Das Dokument US 2013/112081 A1 offenbart eine Vorrichtung zur Bevorratung und Zuführung eines rieselfähigen Substrats.

Die vorliegende Erfindung stellt sich daher die Aufgabe Vorrichtungen und/oder Verfahren anzugeben, mit der und/oder dem eine Getränkezubereitung auf wirtschaftliche und hygienische Weise erfolgen kann.

Diese Aufgabe wird erfindungsgemäß durch eine Vorrichtung zur Bevorratung und Zuführung eines rieselfähigen Substrats nach Anspruch 1 und ein Verfahren zur Montage einer Vorrichtung zur Bevorratung und Zuführung eines rieselfähigen Substrats nach Anspruch 8 gelöst. Zu bevorzugende Weiterbildungen der Erfindung sind Gegenstand der Unteransprüche.

Eine vorliegend offenbarte Vorrichtung zur Zubereitung eines Getränks, insbesondere zur Zubereitung eines proteinhaltigen Mischgetränks, erlaubt es bei entsprechender Gestaltung, die Kriterien des oben genannten Spannungsfeldes besonders gut zu erfüllen.

Die Grundidee der Erfindung basiert auf der Verwendung eines rieselfähigen Substrats, welches insbesondere eine wenigstens im Wesentlichen gleichbleibende Geschmacksgrundlage bereitstellt, das durch die Beimengung wenigstens eines wenigstens im Wesentlichen flüssigen Substrats, insbesondere in Form einer Geschmacksrichtung, individualisiert werden kann.

Die offenbarungsgemäße Vorrichtung hat den Vorteil, dass auf diese Weise weniger erste Behälter vorgesehen sein können, insbesondere nur noch ein erster Behälter vorgesehen sein kann, in dem ein rieselfähiges Substrat bevorratet ist. Auf diese Weise kann der durch den Wegfall zumindest eines Teils der Behälter nach dem Stand der Technik, welche jeweils ein rieselfähiges Substrat mit einer definierten Geschmacksrichtung bereitstellen, gewonnene Platz innerhalb der Vorrichtung vorzugsweise dazu verwendet werden, das Volumen des bzw. der verbleibenden Behälter zu erhöhen, was unter anderem dazu beiträgt, die Wartungs- bzw. Nachfüllintervalle zu verlängern. Des Weiteren kann ein großer erster Behälter auch dazu beitragen, die Betriebskosten der Vorrichtung zu senken, da Skalierungseffekte bei der Produktion und der Verpackung des rieselfähigen Substrats wirksam werden.

Die offenbarungsgemäße Vorrichtung ist weiterhin vorteilhaft, weil über die Bereitstellung des im Wesentlichen flüssigen Substrats, in einem zweiten Behälter, und insbesondere in mehreren zweiten Behältern, die Eigenschaften des zubereiteten Getränks effizient angepasst werden können. Die flüssigen Substrate können beispielsweise hochkonzentrierte Sirups sein, von denen bereits eine kleine Menge ausreicht, um z. B. den Geschmack des zubereiteten Getränks zu modifizieren. Von den zweiten Behältern können eine Vielzahl innerhalb der Vorrichtung kleinbauend bereitgehalten werden, um so eine sehr breit gefächerte Produktvielfalt anbieten zu können.

Unter einer "Vorrichtung zur Zubereitung eines Getränks" im Sinne der vorliegenden Offenbarung ist insbesondere eine manuelle, teilautomatisierte oder vollautomasierte Getränkezubereitungsvorrichtung, insbesondere ein Getränkeautomat, zu verstehen. Das Getränk wird dabei im Zuge eines sogenannten Post-Mix-Verfahrens innerhalb der Vorrichtung zumindest teilweise zubereitet. Vorrichtungen, welche ausschließlich mittels eines sogenannten Pre-Mix-Verfahrens vorgefertigte Getränke in entnehmbare Behälter, beispielsweise Becher, oder bereits befüllte Behälter, beispielsweise Flaschen oder Getränkedosen, abgeben, sind explizit nicht mit umfasst.

"Proteine" im Sinne der vorliegenden Erfindung sind insbesondere biologische Makromoleküle, die aus Aminosäuren aufgebaut sind. Als analoge Begriffe sind "Eiweiße" oder "Eiweißstoffe" zu verstehen. Bausteine der Proteine sind bestimmte als proteinogen, also proteinaufbauend, bezeichnete Aminosäuren, die durch Peptidbindungen zu Ketten verbunden sind. Von besonderer Bedeutung sind hierbei die acht als essentiell bezeichneten Aminosäuren, die der Körper sie nicht selbst herstellen kann, sondern mit der Nahrung aufnehmen muss. Die Aminosäureketten können eine Länge von bis zu mehreren tausend Aminosäuren haben, wobei man Aminosäureketten mit einer Länge mehr als ca. 100 Aminosäuren als Proteine bezeichnet. Im Sinne der vorliegenden Erfindung sind jedoch auch die kurzkettigeren Peptide zu den Prozeinen hinzuzuzählen.

Unter einem "proteinhaltigen Mischgetränk" im Sinne der vorliegenden Erfindung ist insbesondere eine Flüssigkeit zu verstehen, welches zum Verzehr, insbesondere durch einen Menschen geeignet ist, und welches Proteine aufweist, insbesondere in einer Menge von mehr als 2 Gew.-% bezogen auf das Gesamtgewicht des Getränks. Des Weiteren ist das "proteinhaltige Mischgetränk" im Sinne der vorliegenden Erfindung eine Flüssigkeit, welche sich aus mehreren Komponenten zusammensetzt, welche vor dem Verzehr, insbesondere kurz vor dem Verzehr miteinander vermischt werden.

Unter einer "Mischeinrichtung" im Sinne der vorliegenden Erfindung ist insbesondere eine Einrichtung zu verstehen, welche dafür vorgesehen ist, wenigstens zwei Ausgangsstoffe, insbesondere wenigstens drei Ausgangsstoffe, insbesondere ein rieselfähiges Substrat, ein wenigstens im Wesentlichen flüssiges Substrat und eine Trägerflüssigkeit, miteinander zu vermischen. Eine Mischeinrichtung im Sinne der vorliegenden Erfindung kann optional weiterhin dafür vorgesehen sein, die Ausgangsstoffe vor dem Vermischen zu sammeln und/oder nach dem Vermischen abzugeben. Die erfindungsgemäße Mischeinrichtung weist insbesondere einen Mischkörper, wie ein Mischerrad und/oder eine Schraube und/oder einen Propeller, auf.

Unter einem "Behälter" im Sinne der vorliegenden Erfindung ist insbesondere ein Gefäß zu verstehen, dass zumindest in fünf der sechs Ausdehnungsrichtungen des Raums nach dem kartesischen Koordinatensystem begrenzt ist. Die fünfte Richtung kann, insbesondere in Form eines Bodens mit einem Ventil bzw. einer Seitenwand mit einem Ventil, zeitlich befristet in zumindest einem Teil der Abgrenzungsfläche in dieser Erstreckungsrichtung, insbesondere wenigstens im Wesentlichen senkrecht zu dieser Erstreckungsrichtung, geöffnet werden, um den Austritt eines in dem Behälter bevorrateten Mediums, insbesondere Substrat und/oder Trägerflüssigkeit, abzugeben. Weiterhin kann der Behälter auch in der sechsten Ausdehnungsrichtung begrenzt sein, insbesondere in Form eines separaten Deckels oder einer integrierten Deckfläche, um ein Eindringen von Fremdkörpern von außerhalb des Behälters zu unterbinden.

Unter einem "rieselfähigen Substrat" im Sinne der vorliegenden Erfindung ist insbesondere ein aus kleinen Festkörpern bestehender Stoff zu verstehen, insbesondere ein Puder, Pulver oder Granulat.

Unter einem "flüssigen Substrat" im Sinne der vorliegenden Erfindung ist insbesondere ein Stoff zu verstehen, welcher bei der definierten Raumtemperatur von 20 °C einer Formänderung so gut wie keinen, einer Volumenänderung hingegen einen recht großen Widerstand entgegensetzt. Unter einem flüssigen Substrat sind insbesondere alle diejenigen Stoffe zu verstehen, welche bei Raumtemperatur eine dynamische Viskosität η von bis zu 10⁸ mPa*s aufweist.

Unter einer "Trägerflüssigkeit" im Sinne der vorliegenden Erfindung ist insbesondere eine Flüssigkeit zu verstehen, welche aufgrund ihrer intrinsischen Eigenschaften dafür geeignet ist, ein rieselfähiges und/oder ein wenigstens im Wesentlichen flüssiges Substrat in sich zumindest teilweise zu lösen. Trägerflüssigkeiten im Sinne der vorliegenden Erfindung sind insbesondere alle Formen von Wasser mit oder ohne Zusatzstoffen, ebenso wie alle Arten kolloidaler Dispersionen von Proteinen, Milchzucker und Milchfett in Wasser, wie zum Beispiel Milch.

Unter einer "Zuführeinrichtung" im Sinne der vorliegenden Erfindung ist insbesondere eine Einrichtung zu verstehen, welche am Transfer eines Substrats oder der Trägerflüssigkeit hin zur Mischeinrichtung beteiligt ist, insbesondere die Verbindung, insbesondere von einem Behälter und/oder einer Leitung, insbesondere Wasserleitung, hin zur Mischeinrichtung herstellt. Zuführeinrichtungen können passive Komponenten wie z.B. Schütten, Rohre oder Schläuche, und/oder aktive Komponenten aufweisen, wie z.B. Ventile, Schieber oder Fördereinrichtungen, insbesondere Pumpen, Schneckenförderer oder dergleichen.

Unter einer "Ausgabeeinrichtung" im Sinne der vorliegenden Erfindung ist insbesondere eine Einrichtung zu verstehen, welche am Transfer des Getränks hin zu einem, insbesondere aus bzw. von der Vorrichtung entfernbaren, Behälter beteiligt ist, insbesondere die Verbindung, insbesondere von der Mischeinrichtung hin zu dem, insbesondere aus bzw. von der Vorrichtung entfernbaren, Behälter herstellt. Die Ausgabeeinrichtung kann passive Komponenten wie z.B. Trichter, Düsen, Rohre oder Schläuche, und/oder aktive Komponenten aufweisen, wie z.B. Ventile, Schieber, Aufschäumeinrichtungen oder Fördereinrichtungen, insbesondere Pumpen, Schneckenförderer oder dergleichen, und/oder Reinigungseinrichtungen.

Unter einem "Vorlauf" im Sinne der vorliegenden Erfindung ist insbesondere eine dem Mischen zeitlich vorgeschaltete Zuführung von, insbesondere ausschließlich, einer Reinigungsflüssigkeit und/oder bevorzugt der Trägerflüssigkeit zu verstehen, um die Mischeinrichtung vor der Zuführung der Substrate zu reinigen und/oder vorzubereiten, insbesondere indem die Mischeinrichtung befeuchtet wird, um ein Verklumpen bzw. Verkleben durch die zugeführten Substrate während des Mischens zu vermeiden. Die für den Vorlauf verwendete Flüssigkeit kann dabei nach dem Passieren der Mischeinrichtung entweder, insbesondere im Falle der Verwendung von Trägerflüssigkeit, in den, insbesondere aus bzw. von der Vorrichtung entfernbaren, Behälter oder in einen weiteren in der Vorrichtung integrierten Behälter und/oder in einen, insbesondere externen, Abfluss abgegeben werden.

Unter einem "Nachlauf" im Sinne der vorliegenden Erfindung ist insbesondere eine dem Mischen zeitlich nachgeschaltete Zuführung von, insbesondere ausschließlich, einer Reinigungsflüssigkeit und/oder bevorzugt der Trägerflüssigkeit zu verstehen, um die Mischeinrichtung nach der Zuführung der Substrate zu reinigen. Die für den Nachlauf verwendete Flüssigkeit kann dabei nach dem Passieren der Mischeinrichtung entweder, insbesondere im Falle der Verwendung von Trägerflüssigkeit, in den, insbesondere aus bzw. von der Vorrichtung entfernbaren, Behälter oder in einen weiteren in der Vorrichtung integrierten Behälter und/oder in einen, insbesondere externen, Abfluss abgegeben werden.

Nach einer bevorzugten Ausführungsform weist die Mischeinrichtung auf: einen Sammelabschnitt, welcher dafür vorgesehen ist das rieselfähige Substrat, das wenigstens im Wesentlichen flüssige Substrat und die Trägerflüssigkeit zusammenzuführen; einen Mischabschnitt, welcher dafür vorgesehen ist das rieselfähige Substrat, das wenigstens im Wesentlichen flüssige Substrat und die Trägerflüssigkeit zu dem, insbesondere wenigstens im Wesentlichen homogenen, Getränk zu vermischen; und einen Abgabeabschnitt, welcher dafür vorgesehen ist das, insbesondere wenigstens im Wesentlichen homogene, Getränk an die Ausgabeeinrichtung abzugeben, wobei bevorzugt wenigstens zwei Abschnitte aus einer Gruppe, bestehend aus Sammelabschnitt, Mischabschnitt und Abgabeabschnitt, eine Einheit bilden.

Auf diese Weise können zwei verschiedene Arten der Mischeinrichtung realisiert werden: Entweder ist die Mischeinrichtung ein Durchlaufmischer oder ein sequentieller Mischer, wie er weiter unten beschrieben wird. Der Durchlaufmischer zeichnet sich dadurch aus, dass zwischen Mischabschnitt und Ausgabeabschnitt kein aktives Element, wie zum Beispiel ein Ventil, erforderlich ist; insbesondere ist ein Rohr- und/oder Schlauchabschnitt ausreichend. Die Trägerflüssigkeit wird mit den zugeführten Substraten in dem Moment gemischt, wo das Gemisch den Mischabschnitt auf dem Weg vom Sammelabschnitt zum Ausgabeabschnitt, insbesondere unter Ausnutzung der Gravitation, passiert. Bevorzugt befindet sich folglich stets nur ein Teil der Menge des fertigen Getränks in der Mischeinrichtung, was dazu führt, dass diese in vorteilhafter Weise kleinbauend realisiert werden kann.

Nach einer bevorzugten Ausführungsform sind die Mischeinrichtung und die Ausgabeeinrichtung durch ein, insbesondere elektrisch ansteuerbares, Ventil, welches wenigstens eine Öffnungs- und eine Schließposition aufweist, voneinander getrennt.

Nach dieser Ausführung wird die Mischeinrichtung bevorzugt als sequentieller Mischer betrieben. Das bedeutet, dass zuerst die Trägerflüssigkeit mit den Substraten zu der wenigstens im Wesentlichen vollständigen angeforderten Menge des Getränks vermischt wird, bevor eine Abgabe an den Sportler durch eine Ansteuerung des Ventils erfolgt. Hierdurch kann, insbesondere für den Fall, dass der Sportler das Einfüllen des Getränks in den aus bzw. von der Vorrichtung entfernbaren Behälter verfolgen kann, erreicht werden, dass über den gesamten Einfüllzeitraum eine wenigstens im Wesentlichen optisch homogene, insbesondere homogene, Mischung abgegeben wird, was den Getränk in den Augen des Sportlers eine höhere Wertigkeit verleihen kann.

Wenigstens eine der wenigstens einen ersten Zuführeinrichtungen weist eine Komponente auf, insbesondere ist wenigstens eine der wenigstens einen ersten Zuführeinrichtungen in Form einer Komponente gebildet, welche ausgewählt ist aus einer Gruppe, welche eine pneumatische Fördereinrichtung, insbesondere eine Saugfördereinrichtung, eine Vakuumfördereinrichtung und/oder eine Gebläseeinrichtung, aufweist. Die wenigstens eine der wenigstens einen ersten Zuführeinrichtungen kann auch eine Komponente aufweisen, welche ausgewählt ist aus einer Gruppe, welche einen Schneckenförderer, eine Pulverrutsche, ein Förderband oder eine Schlauchpumpe aufweist.

Einzelne Partikel rieselfähiger Substrate können mitunter aneinander haften, was zu einer Verfestigung derselben führen kann. Dies bewirkt, dass eine Entnahme eines rieselfähigen Substrats aus einem Behälter häufig nicht allein passiv unter Ausnutzung der Schwerkraft erfolgen kann, sondern bevorzugt aktiv unterstützt wird. Dies hat den Vorteil, dass eine Zufuhr an rieselfähigem Substrat, insbesondere wenigstens im Wesentlichen in der angeforderten Menge, wenigstens im Wesentlichen unabhängig von der Konsistenz des rieselfähigen Substrats in dem ersten Behälter gewährleistet werden kann.

Nach einer bevorzugten Ausführungsform weist die Trägerflüssigkeit einen Wasseranteil zwischen 50 Gew.-% und 100 Gew.-% und/oder einen Milchanteil zwischen 0 Gew.-% und 100 Gew.-%, insbesondere zwischen 0 Gew.-% und 50 Gew.-%, auf.

Nach einer bevorzugten Ausführungsform ist die dritte Zuführeinrichtung mit einem Trinkwasseranschluss und/oder einem Vorratsbehälter verbunden.

Ein Trinkwasseranschluss ist deshalb vorteilhaft, weil somit derjenige Bestandteil des Getränks, welcher den größten Volumen- und/oder Gewichtsanteil am fertigen Getränk ausmacht, nämlich die Trägerflüssigkeit, nicht eigens aufgefüllt werden muss. Dies führt dazu, dass Auffüllintervalle deutlich verlängert werden können. Der Vorratsbehälter ist vorteilhaft, weil dadurch eine erhöhte Flexibilität hinsichtlich des Aufstellortes erreicht wird, da am Aufstellort kein eigener Trinkwasseranschluss bereitgehalten werden muss. Nach einer weiter bevorzugten Ausführungsform ist die Vorrichtung eingerichtet, die Trägerflüssigkeit je nach Betriebsmodus sowohl von dem Trinkwasseranschluss als auch von dem Vorratsbehälter zu beziehen.

Nach einer bevorzugten Ausführungsform weist die Mischvorrichtung einen oder mehrere, insbesondere elektrisch angetriebenen, Mischkörper auf, welche ausgewählt werden, aus einer Gruppe, aufweisend: einen Propeller, ein Mischerrad und/oder einen flügel-aufweisenden Mischkegel.

Nach einer bevorzugten Ausführungsform ist die Mischeinrichtung eingerichtet, einen Trägerflüssigkeitsstrudel zu erzeugen, welchem das rieselfähige Substrat und/oder das wenigstens im Wesentlichen flüssige Substrat zugeführt wird.

Die Anmelderin hat erkannt, dass rieselfähige Substrate allgemein und ganz besonderes die weiter unten als bevorzugt beschriebenen rieselfähigen Substrate mit einer Proteinkonzentration von wenigstens 20 Gew.-% zu einem Verklumpen innerhalb der Mischeinrichtung neigen können, was zu einer Beeinträchtigung der Getränkequalität und im schlimmsten Fall zu einer Beschädigung der Vorrichtung führt, sollte das verklumpte rieselfähige Substrat die Mischeinrichtung blockieren bzw. verkleben. Deshalb ist es besonders vorteilhaft, insbesondere zuerst, einen Trägerflüssigkeitsstrudel zu erzeugen, welchem, insbesondere dann, das rieselfähige Substrat, insbesondere über einen Zeitraum von 5 bis 50 Sekunden, insbesondere wenigstens im Wesentlichen kontinuierlich, zugeführt wird. So wird dem rieselfähigen Substrat die Möglichkeit gegeben, sich zumindest teilweise in der Trägerflüssigkeit zu lösen ohne zu verklumpen. Selbiges gilt in ähnlicher Weise auch für die Zuführung des wenigstens im Wesentlichen flüssigen Substrats, wobei hier aufgrund des anderen Aggregatszustands auf eine über einen längeren Zeitraum verteilte kontrollierte Abgabe hinsichtlich des Verklumpens verzichtet werden kann. Allerdings ist eine solche Abgabe dennoch vorteilhaft, da somit die, insbesondere geschmackliche, Homogenität innerhalb des aus bzw. von der Vorrichtung entfernbaren, Behälters begünstigt ist.

Nach einer bevorzugten Ausführungsform weist die Vorrichtung 2, 3, 4, 5, 6, 7, 8, 9 oder mehr zweite Behälter und 2, 3, 4, 5, 6, 7, 8, 9 oder mehr zweite Zuführeinrichtungen auf, und wenigstens zwei zweite Zuführeinrichtungen sind durch eine gemeinsame Dosiereinheit miteinander verbunden.

Insbesondere ist jeder der zweiten Behälter über eine eigene Zuführeinrichtung mit der Mischeinrichtung verbunden. Hierdurch kann sie Sortenreinheit der zweiten Substrate innerhalb der Zuführeinrichtungen weitgehend verhindert werden. Des Weiteren kann so eine einfache Ansteuerung der Zuführeinrichtungen erreicht werden, da jede Zuführeinrichtung nur für ein bestimmtes zweites Substrat zuständig ist. Es kann jedoch vorteilhaft sein, aufgrund des in der Nähe, insbesondere oberhalb der Mischeinrichtung begrenzen Bauraums, zwei oder mehr Zuführeinrichtungen, zumindest in dem Bereich nahe der Mischeinrichtung, zu einer, insbesondere kleinbauenden, Dosiereinheit zusammenzufassen, welche das jeweils angeforderte zweite Substrat in der gewünschten Menge an die Mischeinrichtung abgibt.

Nach einer bevorzugten Ausführungsform ist das wenigstens eine rieselfähige Substrat ein wenigstens im Wesentlichen proteinhaltiges Substrat und das wenigstens eine wenigstens im Wesentlichen flüssige Substrat ein wenigstens im Wesentlichen proteinfreies Substrat.

Für die Zubereitung eines proteinhaltigen Mischgetränks, insbesondere Proteinshakes in Sporttrainingsstätten, stellt die Proteinkonzentration des zubereiteten proteinhaltigen Mischgetränks häufig eine zentrale Eigenschaft für die Konsumenten dar, welchen in der Regel an einer möglichst hohen Proteinkonzentration gelegen ist. Die oben beschriebene Ausführungsform ist vorteilhaft, da somit eine Aufgabenteilung zwischen dem rieselfähigen Substrat und dem wenigstens im Wesentlichen flüssigen Substrat erzielt wird. Während es bevorzugt die Aufgabe des rieselfähigen Substrats ist, die Proteinkonzentration des zubereiteten proteinhaltigen Mischgetränks zu definieren, ist es bevorzugt die Aufgabe des wenigstens im Wesentlichen flüssigen Substrats, weitere Eigenschaften des proteinhaltigen Mischgetränks zu bestimmen, wie zum Beispiel Geschmack, Farbe, Konsistenz, Schaumbildung etc.

Nach einer bevorzugten Ausführungsform stellt das wenigstens eine rieselfähige Substrat eine wenigstens im Wesentlichen gleichbleibende Geschmacksgrundlage und das wenigstens eine wenigstens im Wesentlichen flüssige Substrat eine Anpassung des Geschmacks bereit.

Auch hier gilt hinsichtlich der Aufgabenteilung das oben Gesagte. Die wenigstens im Wesentlichen flüssigen Substrate können beispielsweise zumindest zum Teil hochkonzentrierte Sirups sein, von denen bereits eine kleine Menge ausreicht, um den Geschmack des zubereiteten Getränks zu modifizieren. Von den zweiten Behältern können eine Vielzahl innerhalb der Vorrichtung kleinbauend bereitgehalten werden, um so eine sehr breit gefächerte Produktvielfalt anbieten zu können.

Nach einer bevorzugten Ausführungsform weist das rieselfähige Substrat eine Proteinkonzentration auf von wenigstens 20 Gew.-%, bevorzugt wenigstens 60 Gew.-%, weiter bevorzugt wenigstens 70 Gew.-% und am meisten bevorzugt eine Proteinkonzentration aufweist im Bereich von 70 Gew.-% bis 100 Gew.-%.

Eine hohe Proteinkonzentration im rieselfähigen Substrat ist deshalb vorteilhaft, weil somit die Proteinkonzentration im fertigen Getränk erhöht und/oder die erforderliche Menge an rieselfähigem Substrat zur Zubereitung des Getränks verringert werden kann. Letzteres ist insbesondere vorteilhaft, da somit die in einem definierten Volumen bereitgestellte Menge an rieselfähigem Substrat für eine erhöhte Anzahl an zubereiteten Getränken ausreicht, was Wartungs- bzw. Nachfüllintervalle verlängern kann.

Nach einer bevorzugten Ausführung weist wenigstens ein erster und/oder wenigstens ein zweiter Behälter eine Identifizierungseinrichtung auf, welche dafür vorgesehen, insbesondere eingerichtet, ist, den Behälter zu identifizieren, insbesondere eindeutig zu identifizieren. Nach einer bevorzugten Ausführung ist die Vorrichtung dafür vorgesehen, insbesondere eingerichtet, Daten der Identifizierungseinrichtung zu empfangen und zu verarbeiten. Bevorzugt ist die Identifizierungseinrichtung dafür vorgesehen, insbesondere eingerichtet, drahtlos mit der Vorrichtung Daten uni- oder bidirektional auszutauschen.

Die Identifizierungseinrichtung kann Daten übertragen, welche ausgewählt sind aus einer Gruppe, aufweisend: eine Seriennummer, eine Typbezeichnung, eine Chargenbezeichnung, ein Mindesthaltbarkeitsdatum, eine Anzahl der erfolgten Entnahmen, ein Füllstand, eine Zusammensetzung oder dergleichen. Die Identifizierungseinrichtung ist beispielsweise als RFID-Transponder (Radio Frequency IDentification) ausgebildet. Auf diese Weise kann der Einsatz eines Substrates verhindert werden, für welches die Vorrichtung nicht ausgelegt ist. Des Weiteren können Bestellvorgänge zur Nachbestellung von Substratbehältern rechtzeitig angezeigt oder zumindest teilweise automatisch veranlasst werden.

Nach einer bevorzugten Ausführung wird die Identifizierungseinrichtung nach der Restentleerung des Behälters zerstört. Auf diese Weise wird verhindert, dass der Behälter im Nachgang mit einem Substrat befüllt wird, dessen Zusammensetzung nicht mit den Daten der Identifizierungseinrichtung übereinstimmt und wieder eingesetzt wird.

Nach einer bevorzugten Ausführung weist die Vorrichtung eine Mehrzahl, insbesondere 2, 3, 4, 5 oder 6, erste Behälter auf. Auf diese Weise ist es möglich bereits innerhalb der Vorrichtung einen Ersatzbehälter vorzusehen, welcher angesteuert wird, sobald ein anderer erster Behälter leer ist. Alternativ und/oder zusätzlich kann in dem weiteren ersten Behälter ein rieselfähiges Substrat mit anderen intrinsischen Eigenschaften, wie beispielsweise hinsichtlich Laktosekonzentration, Proteinkonzentration und/oder Zusammensetzung bereitgestellt werden.

Nach einer bevorzugten Ausführung ist die dritte Zuführeinrichtung dafür vorgesehen, insbesondere eingerichtet, die Trägerflüssigkeit der Mischeinrichtung wenigstens im Wesentlichen seitlich, d.h. wenigstens im Wesentlichen parallel zu einer inneren Oberfläche der Mischeinrichtung, zuzuführen. Hierdurch wird die Ausbildung eines Trägerflüssigkeitsstrudels zumindest begünstigt.

Nach einer bevorzugten Ausführungsform ist die wenigstens eine zweite Zuführeinrichtung dafür vorgesehen, das wenigstens im Wesentlichen flüssige Substrat der Mischeinrichtung durch wenigstens eine Komponente der dritten Zuführeinrichtung, insbesondere in Form eines Rohr- oder Schlauchabschnitts, zuzuführen.

Dies ist nach einer Ausführung insbesondere vorteilhaft, da hierdurch der Bauraum vermindert wird.

Nach einer bevorzugten Ausführung ist die gemeinsame Dosiereinheit an der wenigstens einen Komponente der dritten Zuführeinrichtung, insbesondere dem Rohr- oder Schlauchabschnitt, insbesondere unmittelbar, angeordnet. Nach einer Ausführung ist die gemeinsame Dosiereinheit, insbesondere dadurch, dazu eingerichtet, das wenigstens im Wesentlichen flüssige Substrat an die wenigstens eine Komponente der dritten Zuführeinrichtung, insbesondere den Rohr- oder Schlauchabschnitt, abzugeben.

Nach einer bevorzugten Ausführung ist die gemeinsame Dosiereinheit zwischen zwei Komponente der dritten Zuführeinrichtung, insbesondere Rohr- oder Schlauchabschnitte, zwischengeschaltet, insbesondere in eine Komponente der dritten Zuführeinrichtung, insbesondere den Rohr- oder Schlauchabschnitt, integriert, oder mit der wenigstens einen Komponente der dritten Zuführeinrichtung, insbesondere dem Rohr- oder Schlauchabschnitt, über einen einzigen Rohr- oder Schlauchabschnitt oder über eine Mehrzahl an Rohr- oder Schlauchabschnitten, insbesondere über jeweils einen Rohr- oder Schlauchabschnitt für jedes wenigstens im Wesentliche flüssige Substrat, verbunden.

Nach einer bevorzugten Ausführung ist die wenigstens eine zweite Zuführeinrichtung, insbesondere direkt, d.h. insbesondere ohne eine zwischengeschaltete gemeinsame Dosiereinheit, mit der wenigstens einen Komponente der dritten Zuführeinrichtung, insbesondere dem Rohr- oder Schlauchabschnitt, verbunden.

Nach einer bevorzugten Ausführung ist die wenigstens eine zweite Zuführeinrichtung und/oder die gemeinsame Dosiereinheit dafür vorgesehen, das wenigstens im Wesentlichen flüssige Substrat in die wenigstens eine Komponente der dritten Zuführeinrichtung, insbesondere in einen Rohr- oder Schlauchabschnitt, einzuspritzen.

Nach einer bevorzugten Ausführung mündet die wenigstens eine Komponente der dritten Zuführeinrichtung, insbesondere der Rohr- oder Schlauchabschnitt, in die Mischeinrichtung.

Nach einer bevorzugten Ausführung weist die Vorrichtung weiterhin eine Sensoreinrichtung auf, welche dafür eingerichtet ist, eine Stellung und/oder eine Stellungsänderung wenigstens eines Elements der ersten Zuführeinrichtung, insbesondere wenigstens einer Schütte, zu erfassen.

Unter einer "Sensoreinrichtung" im Sinne der vorliegenden Erfindung ist insbesondere eine Einrichtung zu verstehen, welche zumindest aus einem (Messgrößen-)Aufnehmer besteht, der eine physikalisch messbare Messgröße erfasst. Die "Sensoreinrichtung" im Sinne der vorliegenden Erfindung kann weitere Elemente der Messkette umfassen, wie zum Beispiel Verstärker, Analog/Digital-Wandler, Codierer und dergleichen. Beispiele für Sensoreinrichtungen im Sinne der vorliegenden Erfindung sind insbesondere optische Induktionsschalter, Kamera-Systeme, RADAR-Sensoren, Thermo-Sensoren, Drehwinkelsensoren, Lichtschranken, insbesondere Laser-Lichtschranken, und dergleichen.

Dies ist insbesondere vorteilhaft, da auf diese Weise die Gefahr eines Verstopfens des Sammelabschnitts und/oder des Mischabschnitts wenigstens vermindert, insbesondere wenigstens im Wesentlichen verhindert werden kann. Das Element der ersten Zuführeinrichtung, insbesondere die Schütte, ist nach einer Ausführung schwenkbar an der ersten Zuführeinrichtung, insbesondere einem Gehäuse derselben angeordnet, insbesondere um einen Verschlussmechanismus für einen Auffüllvorgang bereitzustellen. Bei diesem Verschwenken der Schütte von einer Schließstellung in eine Offenstellung kann bereits eine Quantität rieselfähigen Substrats ungewollt in den Sammelabschnitt und/oder den Mischabschnitt gelangen, was zu einem Verstopfen des Mischabschnitts führen kann. Deshalb sieht diese Ausführungsform eine Sensoreinrichtung, insbesondere in Form eines optischen Induktionsschalters, vor, welcher ein entsprechendes Verschwenken der Schütte detektiert, woraufhin ein Spülvorgang, insbesondere mittels der dritten Zuführeinrichtung, welche die Trägerflüssigkeit, insbesondere Wasser, bereitstellt, initiiert wird, um ein Verstopfen wenigstens im Wesentlichen zu vermeiden, insbesondere zu verhindern.

Nach einer bevorzugten Ausführung weist die erste Zuführeinrichtung an einer Seite eines Gehäuses eine, insbesondere mit einem Deckel verschließbare, Öffnung auf, welche dafür eingerichtet ist, insbesondere im ausgebauten Zustand, in der Zuführeinrichtung befindliches rieselfähiges Substrat wenigstens im Wesentlichen vollständig aus der Zuführeinrichtung abzuführen.

Dies ist insbesondere vorteilhaft, da auf diese Weise vor einem Lösen des ersten Behälters von der ersten Zuführeinrichtung das in der Zuführeinrichtung befindliche rieselfähige Substrat entfernt werden kann. Dies ist insbesondere vorteilhaft, da der Zusammenbau aus erstem Behälter und erster Zuführeinrichtung beim Wechsel des ersten Behälters bevorzugt um 180° gedreht wird, um den Zusammenbau mit der der ersten Zuführeinrichtung entgegengesetzten Seite des ersten Behälters auf einer Unterlage, z.B. einem Tisch abzustellen. Um zu vermeiden, dass beim Lösen der ersten Zuführeinrichtung von dem ersten Behälter rieselfähiges Substrat unkontrolliert und/oder ungewollt aus der Zuführeinrichtung austritt, wird die erste Zuführeinrichtung vorher durch die Öffnung entleert. Insbesondere wird vor der Entleerung der Deckel von der Öffnung entfernt und/oder nach der Entleerung, insbesondere vor dem Einbau in die Vorrichtung, wieder mit dem Deckel verschlossen.

Ein offenbarungsgemäßes Verfahren zur Zubereitung eines Getränks, insbesondere eines proteinhaltigen Mischgetränks, zur Durchführung in einer Vorrichtung der oben beschriebenen Art, weist die folgenden Schritte auf:
(a) Bereitstellen einer Trägerflüssigkeit, eines rieselfähigen Substrats und eines wenigstens im Wesentlichen flüssigen Substrats;
(b) Zuführen der Trägerflüssigkeit, des rieselfähigen Substrats und des wenigstens im Wesentlichen flüssigen Substrats zu der Mischeinrichtung;
(c) Vermischen der Trägerflüssigkeit, des rieselfähigen Substrats und des wenigstens im Wesentlichen flüssigen Substrats zu einem, insbesondere wenigstens im Wesentlichen homogenen, Getränk durch die Mischeinrichtung; und
(d) Abgeben des, insbesondere wenigstens im Wesentlichen homogenen, Getränks,
wobei, insbesondere wenigstens, die Schritte (b) und (c) sequentiell oder parallel oder in Teilschritten wechselweise oder in beliebiger Kombination ausgeführt werden können.

Bezüglich der sich hieraus ergebenden Vorteile wird zur Vermeidung von Wiederholungen auf die obigen Erläuterungen zu den verschiedenen Ausführungsformen der Vorrichtung verwiesen, welche hier im selben Umfang Gültigkeit besitzen.

Nach einer bevorzugten Ausführungsform weist das Verfahren in zeitlicher Aufeinanderfolge, insbesondere in - bis auf die nachfolgend aufgeführten Einschränkungen - exakt der nachfolgend angegebenen Reihenfolge, die folgenden Teilschritte auf:
- Zeitpunkt t₁:: Beginn des Zuführens der Trägerflüssigkeit;
- Zeitpunkt t₂:: Beginn des Erzeugens eines Trägerflüssigkeitsstrudels;
- Zeitpunkt t₃:: Beginn des Zuführens des rieselfähigen Substrats und/oder des wenigstens im Wesentlichen flüssigen Substrats zum Trägerflüssigkeitsstrudel;
- Zeitpunkt t₄:: Beginn des Zuführens des rieselfähigen Substrats, wenn zum Zeitpunkt t₃ damit begonnen wurde das wenigstens im Wesentlichen flüssige Substrat zuzuführen; oder Beginn des Zuführens des wenigstens im Wesentlichen flüssigen Substrats, wenn zum Zeitpunkt t₃ damit begonnen wurde das rieselfähige Substrat zuzuführen;
- Zeitpunkt t₅:: Beenden des Zuführens des rieselfähigen Substrats und/oder des wenigstens im Wesentlichen flüssigen Substrats;
- Zeitpunkt t₆:: Beenden des Zuführens des rieselfähigen Substrats, wenn zum Zeitpunkt t₅ das Zuführen des wenigstens im Wesentlichen flüssigen Substrats beendet wurde; oder Beenden des Zuführens des wenigstens im Wesentlichen flüssigen Substrats, wenn zum Zeitpunkt t₅ das Zuführen des rieselfähigen Substrats beendet wurde;
- Zeitpunkt t₇:: Beginn des Erzeugens eines Nachlaufs, insbesondere indem das Zuführen der Trägerflüssigkeit, insbesondere ohne Unterbrechung, fortgesetzt wird;
- Zeitpunkt t₈:: Beenden des Erzeugens eines Nachlaufs;
- Zeitpunkt t₉:: Beenden des Erzeugens des Trägerflüssigkeitsstrudels; und
- Zeitpunkt t₁₀:: Beenden des Zuführens der Trägerflüssigkeit.

Bezüglich der sich hieraus ergebenden Vorteile, insbesondere hinsichtlich des Vermeidens der Klumpenbildung und der Erlangung eines sehr hohen Hygieneniveaus, wird auf die obigen Erläuterungen zu den verschiedenen Ausführungsformen der Vorrichtung verwiesen, welche hier im selben Umfang Gültigkeit besitzen.

Nach einer bevorzugten Ausführungsform weist ein Zeitraum t₂ bis t₃ eine Länge auf im Bereich von 0,1 bis 10 Sekunden; und/oder ein Zeitraum vom Beginn des Zuführens des rieselfähigen Substrats bis zum Beenden des Zuführens des rieselfähigen Substrats weist eine Länge auf im Bereich von 5 bis 120 Sekunden, bevorzugt von 10 bis 80 Sekunden und besonders bevorzugt im Bereich von 25 bis 60 Sekunden; und/oder ein Zeitraum t₇ bis t₈ weist eine Länge auf im Bereich von 1 bis 10 Sekunden; und/oder der Zeitpunkt t₅ liegt vor dem Zeitpunkt t₄, wenn die zum Zeitpunkt t₃ begonnene Zufuhr des einen Substrats beendet wird, bevor mit der Zufuhr des anderen Substrats begonnen wird; und/oder die Zeitpunkte t₁ und t₂ fallen zusammen; und/oder die Zeitpunkte t₃ und t₄ fallen zusammen; und/oder die Zeitpunkte t₄ und t₅ fallen zusammen; und/oder die Zeitpunkte t₅ und t₆ fallen zusammen; und/oder die Zeitpunkte t₆ und t₇ fallen zusammen; und/oder die Zeitpunkte t₈ und t₉ fallen zusammen; und/oder die Zeitpunkte t₉ und t₁₀ fallen zusammen; und/oder die Zeitpunkte t₈ und t₁₀ fallen zusammen. Nach einer bevorzugten Ausführungsform ergibt sich der Zeitraum vom Beginn des Zuführens des rieselfähigen Substrats *t_{Beginn}* bis zum Beenden des Zuführens des rieselfähigen Substrats *t_{Ende}* in Abhängigkeit von der Menge x des abzugebenden Getränks, insbesondere wenigstens im Wesentlichen aus dem Zusammenhang: ${t}_{Ende} - {t}_{Beginn} = x ⋅ 1 \frac{s}{10 ml} ,$, bevorzugt für einen Bereich für x von 100 ml bis 1.000 ml.

Der Zeitraum t₂ bis t₃ wird auch als Vorlauf bezeichnet. Der Vorlauf dient dazu, die Mischeinrichtung vor der Zuführung der Substrate zu reinigen und/oder vorzubereiten, insbesondere indem die Mischeinrichtung befeuchtet wird, um ein Verklumpen bzw. Verkleben durch die zugeführten Substrate während des Mischens zu vermeiden.

Es wird, wie oben bereits beschrieben, bevorzugt das rieselfähige Substrat, insbesondere über einen Zeitraum von 5 bis 120 Sekunden, insbesondere wenigstens im Wesentlichen kontinuierlich, zugeführt, um dem rieselfähigen Substrat die Möglichkeit zu geben, sich zumindest teilweise in der Trägerflüssigkeit zu lösen ohne zu verklumpen. Des Weiteren hat die Anmelderin herausgefunden, dass die Zuführungsform des rieselfähigen Substrats die Cremigkeit des resultierenden Getränks beeinflusst, da die Cremigkeit erhöht wird je mehr Zeit man sich mit dem Einrühren, sprich dem Zuführen, lässt. Eine erhöhte Cremigkeit wird von vielen Sportlern dabei als angenehm empfunden, was die Attraktivität des Produkts steigert. Weiterhin ist es vorteilhaft, die Zeitpunkte ausgewählter Ereignisse zusammenfallen zu lassen, um den Zeitraum zwischen der Auswahl des Getränks durch den Sportler und der Ausgabe desselben durch die Vorrichtung zu begrenzen.

Nach einer bevorzugten Ausführung wird die Trägerflüssigkeit der Mischeinrichtung wenigstens im Wesentlichen seitlich, d.h. wenigstens im Wesentlichen parallel zu einer inneren Oberfläche der Mischeinrichtung, zugeführt. Hierdurch wird die Ausbildung eines Trägerflüssigkeitsstrudels zumindest begünstigt.

Nach einer bevorzugten Ausführung werden das wenigstens im Wesentlichen flüssige Substrat und die Trägerflüssigkeit der Mischeinrichtung durch wenigstens eine Komponente einer dritten Zuführeinrichtung, insbesondere in Form eines Rohr- oder Schlauchabschnitts, zugeführt.

Dies ist nach einer Ausführung insbesondere vorteilhaft, da hierdurch der begrenzte Bauraum oberhalb der Mischeinrichtung für andere Komponenten der Vorrichtung zur Verfügung steht.

Nach einer bevorzugten Ausführung wird das wenigstens im Wesentlichen flüssige Substrat an die wenigstens eine Komponente der dritten Zuführeinrichtung, insbesondere den Rohr- oder Schlauchabschnitt, direkt durch die wenigstens eine zweite Zuführeinrichtung oder durch die gemeinsame Dosiereinheit abgegeben, insbesondere in diese eingespritzt.

Nach einer bevorzugten Ausführung wird das wenigstens im Wesentlichen flüssige Substrat über einen, insbesondere gemeinsamen, Rohr- oder Schlauchabschnitt der wenigstens einen Komponente der dritten Zuführeinrichtung zugeführt, wobei dieser Rohr- oder Schlauchabschnitt dazu eingerichtet ist voneinander verschiedene wenigstens im Wesentlichen flüssige Substrate zu führen.

Nach einer bevorzugten Ausführung wird das wenigstens im Wesentlichen flüssige Substrat über eine Mehrzahl an Rohr- oder Schlauchabschnitten der wenigstens einen Komponente der dritten Zuführeinrichtung zugeführt, wobei insbesondere für jedes wenigstens im Wesentlichen flüssige Substrat ein eigener Rohr- oder Schlauchabschnitt vorgesehen ist.

Eine hier beschriebene Verwendung sieht vor, die oben beschriebene Vorrichtung zur Durchführung des oben beschriebenen Verfahrens bei der Zubereitung eines Getränks, insbesondere eines proteinhaltigen Mischgetränks, einzusetzen.

Bezüglich der sich hieraus ergebenden Vorteile wird auf die obigen Erläuterungen zu den verschiedenen Ausführungsformen der Vorrichtung und des Verfahrens verwiesen, welche hier im selben Umfang Gültigkeit besitzen.

Die Vorrichtung zur Bevorratung und Zuführung eines rieselfähigen Substrats, insbesondere zur Verwendung in einer Vorrichtung zur Zubereitung eines Getränks, insbesondere zur Zubereitung eines proteinhaltigen Mischgetränks, nach einer der hier beschriebenen Ausführungen weist auf:
wenigstens einen ersten Behälter zur Bevorratung eines rieselfähigen Substrats, wobei der erste Behälter eine mechanische Schnittstelle aufweist,
wenigstens eine, insbesondere modular ausgebildete, erste Zuführeinrichtung, welche dafür vorgesehen ist, einer Mischeinrichtung das rieselfähige Substrat aus einem der ersten Behälter zuzuführen, wobei die erste Zuführeinrichtung aufweist:
   ein Gehäuse;
   eine mechanische Aufnahme, welche in und/oder an dem Gehäuse angeordnet ist und welche mit der mechanischen Schnittstelle des ersten Behälters verbunden ist, insbesondere in Eingriff steht; und
   eine passive Fördereinrichtung, welche an und/oder in dem Gehäuse angeordnet ist, insbesondere aufgesteckt ist und welche dafür vorgesehen ist, der Mischeinrichtung rieselfähiges Substrat, insbesondere eine definierte Menge desselben, zuzuführen; und eine aktive Fördereinrichtung, welche wenigstens teilweise innerhalb des Gehäuses angeordnet ist.

Dies ist insbesondere deshalb vorteilhaft, da auf diese Weise eine einfache Vorbereitung der Vorrichtung zur Bevorratung und Zuführung eines rieselfähigen Substrats, zur Verwendung in der Vorrichtung zur Zubereitung eines Getränks der hier beschriebenen Art ermöglicht wird.

Dies liegt insbesondere daran, dass der erste Behälter bereits außerhalb der Vorrichtung zur Zubereitung eines Getränks mit der ersten Zuführeinrichtung verbunden werden kann und dieser Verbund dann in die Vorrichtung zur Zubereitung eines Getränks eingesetzt wird, was eine einfache Handhabung ermöglicht.

Nach einer Ausführung ist es hierdurch insbesondere möglich, vorkonfektionierte erste Behälter kopfüber, d.h. mit der insbesondere einzigen Öffnung, in Schwerkraftrichtung nach unten ausgerichtet in die Vorrichtung zur Zubereitung eines Getränks einzusetzen, insbesondere ohne die Vorrichtung, insbesondere die Vorrichtungen, zu verschmutzen. Gleichzeitig ist es auf diese Weise nach einer Ausführung möglich, die Schwerkraft bei der Entnahme des rieselfähigen Substrats zumindest unterstützend zu nutzen.

Die aktive Fördereinrichtung ist dafür vorgesehen, der passiven Fördereinrichtung rieselfähiges Substrat, insbesondere eine definierte Menge desselben, zuzuführen.

Dies ist nach einer Ausführung vorteilhaft, da auf diese Weise die Wirkung der Schwerkraft unterstützt werden kann oder - je nach Einbaulage - überwunden werden kann. Insbesondere ist es durch entsprechend ausgestaltete aktive Fördereinrichtungen möglich auch Restmengen aus dem ersten Behälter zu entnehmen und/oder das rieselfähige Substrat im Falle einer Verfestigung aufzulockern.

Nach einer Ausführung weist die passive Fördereinrichtung eine Komponente auf, insbesondere ist diese in Form einer Komponente gebildet, welche ausgewählt ist aus einer Gruppe, welche eine Pulverrutsche, eine Schütte, einen Schlauchabschnitt, und/oder einen Rohrabschnitt aufweist; erfindungsgemäß weist die aktive Fördereinrichtung weist eine Komponente auf, insbesondere ist diese in Form einer Komponente gebildet, welche ausgewählt ist aus einer Gruppe, welche einen Schneckenförderer, ein Förderband, eine Schlauchpumpe und/oder eine pneumatischen Fördereinrichtung, insbesondere eine Saugfördereinrichtung, eine Vakuumfördereinrichtung und/oder eine Gebläseeinrichtung, aufweist.

Nach einer Ausführung ist das wenigstens eine rieselfähige Substrat ein wenigstens im Wesentlichen proteinhaltiges Substrat und das wenigstens eine wenigstens im Wesentlichen flüssige Substrat ein wenigstens im Wesentlichen proteinfreies Substrat. Nach einer Ausführung weist das rieselfähige Substrat eine Proteinkonzentration auf von wenigstens 20 Gew.-%, bevorzugt wenigstens 60 Gew.-%, weiter bevorzugt wenigstens 70 Gew.-% und am meisten bevorzugt eine Proteinkonzentration aufweist im Bereich von 70 Gew.-% bis 100 Gew.-%.

Nach einer Ausführung stellt das wenigstens eine rieselfähige Substrat eine wenigstens im Wesentlichen gleichbleibende Geschmacksgrundlage bereit und das wenigstens eine wenigstens im Wesentlichen flüssige Substrat eine Anpassung des Geschmacks, insbesondere in Form einer Geschmacksrichtung, bereit.

Hinsichtlich weiterer Erläuterungen, insbesondere von Vorteilen, von den verschiedenen hier beschriebenen Ausführungen der Vorrichtung zur Bevorratung und Zuführung eines rieselfähigen Substrats wird auf die obige Offenbarung in Bezug auf die Vorrichtung zur Zubereitung eines Getränks verwiesen, welche hier in gleicher Weise gilt, sofern sich für den Fachmann nicht in naheliegender Weise ein anderes ergibt.

Ein erfindungsgemäßes Verfahren zur Montage einer Vorrichtung zur Bevorratung und Zuführung eines rieselfähigen Substrats, insbesondere nach einer der hier beschriebenen Ausführungen, und zum Einbau derselben in eine Vorrichtung zur Zubereitung eines Getränks, insbesondere zur Zubereitung eines proteinhaltigen Mischgetränks, insbesondere nach einer der hier beschriebenen Ausführungen, weist die Schritte auf:
Mechanisches Verbinden eines ersten Behälters zur Bevorratung eines rieselfähigen Substrats mit einer, insbesondere modular ausgebildeten, ersten Zuführeinrichtung, welche dafür vorgesehen ist, einer Mischeinrichtung das rieselfähige Substrat aus einem der ersten Behälter zuzuführen;
Einsetzen des durch das mechanische Verbinden hergestellten Zusammenbaus, aufweisend den ersten Behälter und die erste Zuführeinrichtung in die Vorrichtung zur Zubereitung eines Getränks;
Anbringen, insbesondere Aufstecken und/oder Einstecken, einer passiven Fördereinrichtung an der ersten Zuführeinrichtung zur Verbindung des Zusammenbaus mit der Vorrichtung zur Zubereitung eines Getränks, insbesondere zur Zubereitung eines proteinhaltigen Mischgetränks.

Dies ist insbesondere vorteilhaft, da auf diese Weise ein hygienisches Einsetzen des ersten Behälters in die Vorrichtung zur Zubereitung eines Getränks ermöglicht wird. Insbesondere entfällt ein umständliches Auffüllen eines in die Vorrichtung zur Zubereitung eines Getränks fest integrierten Behälters, des weiteren wird ein Verschmutzen des Innenraums der Vorrichtung zur Zubereitung eines Getränks reduziert, insbesondere vermieden.

Nach einer Ausführung wird der der erste Behälter bei der Montage der Vorrichtung zur Bevorratung und Zuführung eines rieselfähigen Substrats mit der Öffnung nach oben zeigend gelagert.

Nach einer Ausführung wird nach einem Öffnen des ersten Behälters die, insbesondere zusammengebaute, erste Zuführeinrichtung mit dem ersten Behälter mechanisch verbunden, insbesondere wird die erste Zuführeinrichtung auf den ersten Behälter aufgeschraubt.

Nach einer Ausführung ist ein Auslass der ersten Zuführeinrichtung durch einen Verschluss, insbesondere einen Stopfen, verschlossen. Dies ist insbesondere vorteilhaft, da auf diese Weise ein Herausrieseln des rieselfähigen Substrats während dem, insbesondere anschließenden, Einsetzen des Zusammenbaus in die Vorrichtung zur Zubereitung eines Getränks zumindest vermindert, insbesondere verhindert, werden kann.

Nach einer Ausführung wird der Verschluss nach dem Einsetzen des Zusammenbaus entfernt, bevor die passive Fördereinrichtung an der ersten Zuführeinrichtung zur Verbindung des Zusammenbaus mit der Vorrichtung zur Zubereitung eines Getränks angebracht, insbesondere aufgesteckt und/oder eingesteckt, wird.

Weitere vorteilhafte Weiterbildungen der vorliegenden Erfindung ergeben sich aus den Unteransprüchen und der nachfolgenden Beschreibung bevorzugter Ausführungsformen. Hierzu zeigt:
- Fig. 1a: eine stark schematisierte Ansicht einer Ausführungsform der oben beschriebenen offenbarungsgemäßen Vorrichtung;
- Fig. 1b: eine stark schematisierte Ansicht einer weiteren Ausführungsform der oben beschriebenen offenbarungsgemäßen Vorrichtung;
- Fig. 2: eine stark schematisierte Ansicht eines Teils einer weiteren Ausführungsform der oben beschriebenen offenbarungsgemäßen Vorrichtung;
- Fig. 3: eine stark schematisierte Ansicht eines ersten Behälters nach einer Ausführungsform der oben beschriebenen offenbarungsgemäßen Vorrichtung;
- Fig. 4: eine stark schematisierte Ansicht eines unteren Bereichs des ersten Behälters nach einer Ausführungsform der oben beschriebenen offenbarungsgemäßen Vorrichtung;
- Fig. 5: ein Flussdiagramm des offenbarungsgemäßen Verfahrens;
- Fig. 6: eine Explosionsdarstellung einer Ausführungsform einer Vorrichtung zur Bevorratung und Zuführung eines rieselfähigen Substrats;
- Fig. 7: eine Schnittdarstellung der Vorrichtung von Fig. 6 im zusammengebauten Zustand;
- Fig. 8: eine schematische Ansicht einer Ausführung des Innenraums der Vorrichtung zur Zubereitung eines Getränks;
- Fig. 9: eine schematische Ansicht einer weiteren Ausführung des Innenraums der Vorrichtung zur Zubereitung eines Getränks;
- Fig. 10: eine schematische Ansicht einer weiteren Ausführung des Innenraums der Vorrichtung zur Zubereitung eines Getränks;
- Fig. 10a: eine schematische Teilansicht der Ausführungsform der Fig. 10;
- Fig. 10b: eine gegenüber der Fig. 10a geneigte schematische Teilansicht der Ausführungsform der Fig. 10;
- Fig. 11: eine stark schematisierte Ansicht eines Teils einer weiteren Ausführungsform der oben beschriebenen offenbarungsgemäßen Vorrichtung; und
- Fig. 12: eine schematisierte Ansicht einer weiteren Ausführung der Vorrichtung zur Bevorratung und Zuführung eines rieselfähigen Substrats.

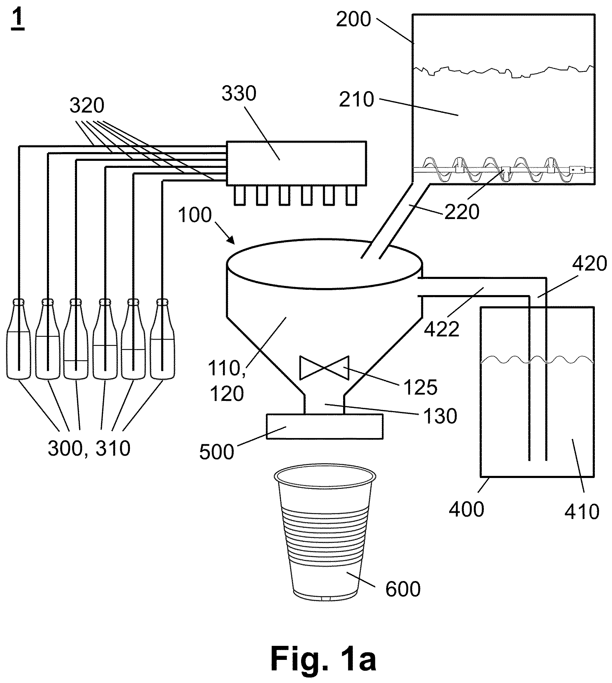

Fig. 1a zeigt eine stark schematisierte Ansicht einer beispielhaften Ausführungsform der oben beschriebenen offenbarungsgemäßen Vorrichtung 1 zur Zubereitung eines Getränks, insbesondere zur Zubereitung eines proteinhaltigen Mischgetränks.

Die Vorrichtung 1 weist eine Mischeinrichtung 100, einen ersten Behälter 200, eine Mehrzahl zweiter Behälter 300, einen Vorratsbehälter 400 und eine Ausgabeeinrichtung 500 auf.

Weiterhin ist ein aus bzw. von der Vorrichtung entfernbarer Behälter 600 gezeigt, in welchen das Getränk abgegeben wird, welcher jedoch aufgrund seiner Entfernbarkeit nicht als Komponente der Vorrichtung 1 zu sehen ist. Der aus bzw. von der Vorrichtung entfernbare Behälter 600 kann vor der Getränkeauswahl durch den Bediener, insbesondere den Sportler, in die Vorrichtung 1 ein- und/oder an diese herangeführt werden, insbesondere in Form einer wiederverwendbaren Trinkflasche, Kunststoff- oder Glasbechers bzw. -tasse, oder von der Vorrichtung 1 wird im Zuge der Getränkebereitstellung ein einmalig verwendbarer Behälter, insbesondere ein Papp- oder Kunststoffbecher, oder ein wiederverwendbarer Behälter der oben beschriebenen Art zur Verfügung gestellt.

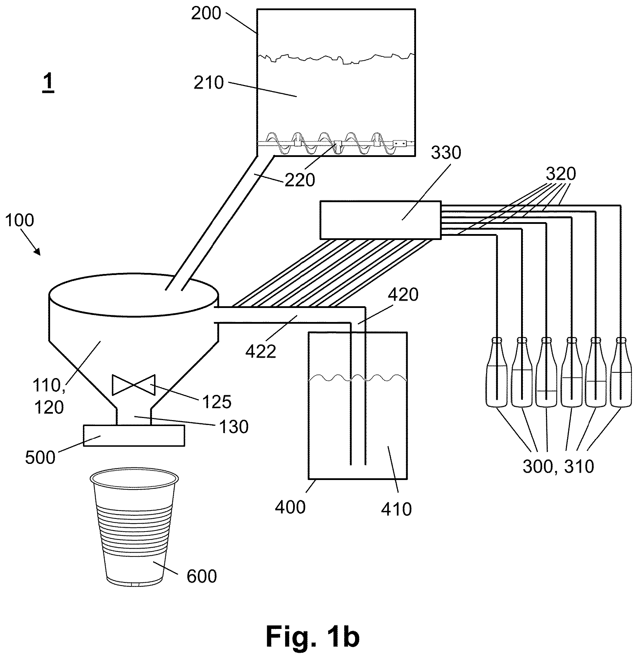

Der erste Behälter 200 ist mit einem rieselfähigen Substrat 210, insbesondere einem proteinhaltigen Pulver, gefüllt. Das rieselfähige Substrat 210 wird der Mischeinrichtung 100 über eine erste Zuführeinrichtung 220 zugeführt. In der in Fig. 1 dargestellten Ausführungsform setzt sich die erste Zuführeinrichtung 220 zusammen aus einem, insbesondere aktiv angetriebenen, bevorzugt elektrisch angetriebenen, Schneckenförderer, welcher innerhalb des ersten Behälters 200 angeordnet ist, und einer Pulverrutsche, welche eine Verbindung zwischen dem ersten Behälter 200 und der Mischeinrichtung 100 bereitstellt, zusammen. Die Pulverrutsche kann dabei obenseitig offen oder obenseitig geschlossen, insbesondere in Form eines Rohr- oder Schlauchabschnitts, ausgebildet sein.

Die zweiten Behälter 300 sind mit wenigstens im Wesentlichen flüssigen Substraten 310, insbesondere Sirups verschiedener Geschmacksrichtungen zur Anpassung des Geschmacks des fertigen Getränks, gefüllt. Die zweiten Behälter 300 sind über jeweils eine eigene zweite Zuführeinrichtung 320 mit der Mischeinrichtung, zumindest indirekt, insbesondere über eine gemeinsame Dosiereinheit 330, verbunden. Die zweiten Zuführeinrichtungen 320 können passive Komponenten, wie z.B. Rohre und/oder Schläuche, und/oder aktive Komponenten (nicht dargestellt) aufweisen, wie z.B. Ventile, Schieber oder Fördereinrichtungen, insbesondere Pumpen, Schneckenförderer oder dergleichen.

Nach der in Fig. 1a dargestellten Ausführungsform sind alle zweiten Zuführeinrichtungen 320 über eine gemeinsame Dosiereinheit 330 mit der Mischeinrichtung 100 verbunden. Dies gestattet eine platzsparende Bereitstellung aller verfügbaren wenigstens im Wesentlichen flüssigen Substrate 310 an, insbesondere oberhalb, der Mischeinrichtung 100. Ein weiterer Vorteil dieses Aufbaus liegt in der Möglichkeit, durch das Reinigen einer einzigen Komponente, sprich der gemeinsamen Dosiereinheit 330, alle Ausgänge der wenigstens im Wesentlichen flüssigen Substrate 310 auf einmal zu säubern, was die Reinigung sehr effizient gestaltet.

In dem Vorratsbehälter 400 wird eine Trägerflüssigkeit 410, insbesondere Leitungs- und/oder Mineralwasser, bevorratet. Der Vorratsbehälter 400 ist mit der Mischeinrichtung 100 über eine dritte Zuführeinrichtung 420 verbunden, wobei letztere einen Rohr- oder Schlauchabschnitt 422 aufweist, welcher insbesondere in die Mischeinrichtung 100 mündet. Die dritte Zuführeinrichtung 420 kann passive Komponenten wie z.B. Rohre oder Schläuche, und/oder aktive Komponenten (nicht dargestellt) aufweisen, wie z.B. Ventile, Schieber oder Fördereinrichtungen, insbesondere Pumpen, Schneckenförderer oder dergleichen. Alternativ und/oder zusätzlich zur dargestellten Ausführungsform kann die dritte Zuführeinrichtung 420 auch anstelle des Vorratsbehälters 410 mit einem Wasseranschluss (nicht dargestellt) verbunden sein.

Die Mischeinrichtung 100 der in Fig. 1 dargestellten Ausführungsform setzt sich zusammen aus einem Sammelabschnitt 110, einem Mischabschnitt 120 und einem Abgabeabschnitt 130. Der Sammelabschnitt ist dafür vorgesehen, das rieselfähige Substrat 210, das wenigstens im Wesentlichen flüssige Substrat 310 und die Trägerflüssigkeit 410 zusammenzuführen. Dies geschieht vorliegend in Form einer trichterförmigen Ausgestaltung der Mischeinrichtung 100, wodurch das rieselfähige Substrat 210, das wenigstens im Wesentlichen flüssige Substrat 310 und die Trägerflüssigkeit 410 gemeinsam dem Mischabschnitt 120 zugeführt werden. Bevorzugt wird die Trägerflüssigkeit 410 der Mischeinrichtung 100 wenigstens im Wesentlichen seitlich, d.h. wenigstens im Wesentlichen parallel zu einer inneren Oberfläche der Mischeinrichtung 100, zugeführt, um die Ausbildung eines Trägerflüssigkeitsstrudels wenigstens zu begünstigen.

Der Mischabschnitt 120 ist dafür vorgesehen, das rieselfähige Substrat 210, das wenigstens im Wesentlichen flüssige Substrat 310 und die Trägerflüssigkeit 410 zu dem, insbesondere wenigstens im Wesentlichen homogenen, Getränk zu vermischen. Die Mischeinrichtung 100, insbesondere der Mischabschnitt 120, weist hierfür einen, insbesondere elektrisch angetriebenen, Mischkörper 125 auf, welcher ausgewählt wird, aus einer Gruppe, aufweisend: einen Propeller, ein Mischerrad und/oder einen flügel-aufweisenden Mischkegel.

Das im Mischabschnitt 120 gemischte wenigstens im Wesentlichen homogene, Getränk gelangt nach dem Mischen, insbesondere passiv, insbesondere unter Ausnutzung der Schwerkraft, in den Abgabeabschnitt 130, welcher dafür vorgesehen ist, das, insbesondere wenigstens im Wesentlichen homogene, Getränk an die Ausgabeeinrichtung 500 abzugeben. Nach der in Fig. 1 dargestellten Ausführungsform wird der Abgabeabschnitt 130 durch einen Rohr- und/oder Schlauchabschnitt gebildet, welcher an den Mischabschnitt 120 abgeformt ist.

Die Ausgabeeinrichtung 500 übernimmt ggfs. die Nachbereitung des Getränks und steuert dessen Abgabe hin zu dem, insbesondere aus bzw. von der Vorrichtung entfernbaren, Behälter 600. Die Ausgabeeinrichtung kann passive Komponenten wie z.B. Trichter, Düsen, Rohre oder Schläuche, und/oder aktive Komponenten aufweisen, wie z.B. Ventile, Schieber, Aufschäumeinrichtungen oder Fördereinrichtungen, insbesondere Pumpen, Schneckenförderer oder dergleichen, und/oder Reinigungseinrichtungen. In der in Fig. 1 dargestellten Ausführungsform dient die Ausgabeeinrichtung 500 insbesondere der Hygiene im Ausgabebereich, beispielsweise durch das Verhindern von Tropfen und/oder Spritzern des Getränks in einem Ausgabebereich (nicht gezeigt) der Vorrichtung 1 durch eine entsprechend ausgebildete Düse und/oder eine separate Reinigungseinrichtung.

Die Figur 1b zeigt eine stark schematisierte Ansicht einer weiteren Ausführungsform der oben beschriebenen offenbarungsgemäßen Vorrichtung 1 zur Zubereitung eines Getränks, insbesondere zur Zubereitung eines proteinhaltigen Mischgetränks. Die Ausführungsform der Fig. 1b entspricht weitgehend der der Fig. 1a, weshalb die obigen Erläuterungen bis auf die nachfolgend aufgezeigten Unterschiede für die Fig. 1b in gleicher Weise gelten.

Die Ausführungsform der Fig. 1b unterscheidet sich im Wesentlichen dadurch von der Ausführungsform der Fig. 1a, dass die Zuführung des wenigstens im Wesentlichen flüssigen Substrats 310 zu der Mischeinrichtung 100 nicht direkt erfolgt, sondern indirekt durch den Rohr- oder Schlauchabschnitt 422 der dritten Zuführeinrichtung 420. Hierbei wird das wenigstens im Wesentlichen flüssige Substrat 310 durch die wenigstens eine zweite Zuführeinrichtung 320 in den Rohr- oder Schlauchabschnitt 422 eingespritzt. Nach der in der Fig. 1b dargestellten Ausführungsform sind die zweiten Behälter 300 über jeweils eine eigene zweite Zuführeinrichtung 320 mit der gemeinsamen Dosiereinheit 330 fluidführend verbunden. Die gemeinsame Dosiereinheit 330 ist mit dem Rohr- oder Schlauchabschnitt 422 über jeweils eine separate Zuführleitung und/oder ein separates Zuführrohr für jedes wenigstens im Wesentlichen flüssige Substrat 310 fluidführend verbunden.

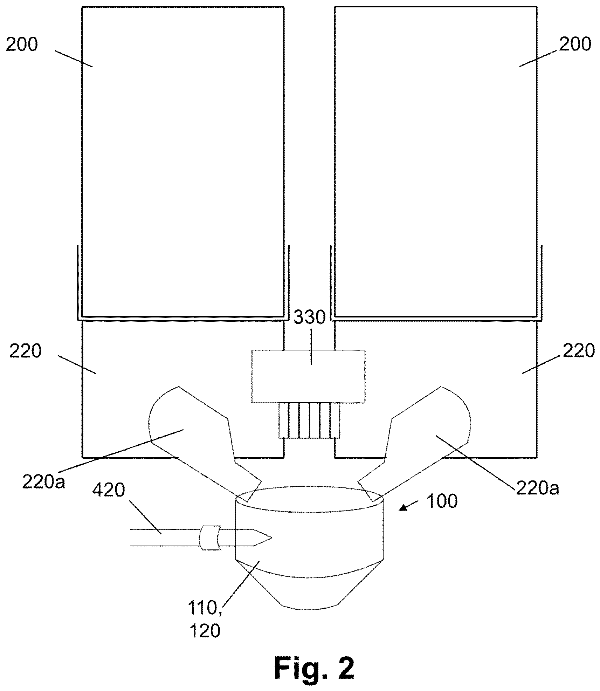

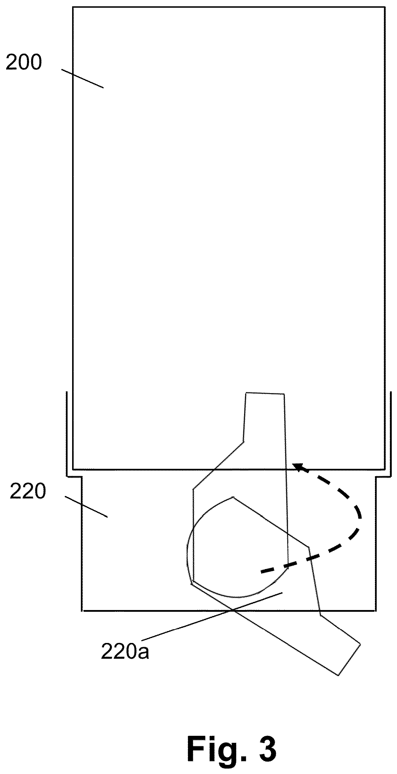

Die Figuren 2 und 3 betreffen eine weitere Ausführungsform der Vorrichtung 1. Die Vorrichtung 1 weist hier zwei erste Behälter 200 auf. Im Unterschied zur oben beschriebenen Ausführungsform ist die Schütte 220a außerhalb des ersten Behälters 200 angeordnet. Der erste Behälter 200 wird auf die Zuführeinrichtung 220 aufgesetzt, insbesondere aufgeschraubt, um einen Substrattransfer zu der Mischeinrichtung 100 zu ermöglichen. Die erste Zuführeinrichtung 220 kann nach einer Ausführung zusammen mit einem leeren ersten Behälter 200 aus der Vorrichtung im Zuge eines Auffüllvorgangs entnommen werden, außerhalb der Vorrichtung 1 von diesem getrennt werden, mit einem vollen ersten Behälter 200 außerhalb der Vorrichtung 1 verbunden werden, um dann zusammen mit diesem wieder in die Vorrichtung 1 eingesetzt zu werden. Wie in Fig. 3 zu sehen, kann eine Schütte 220a schwenkbar an der ersten Zuführeinrichtung 220 angeordnet sein, um beispielsweise einen Verschlussmechanismus für den oben beschriebenen Auffüllvorgang bereitzustellen.

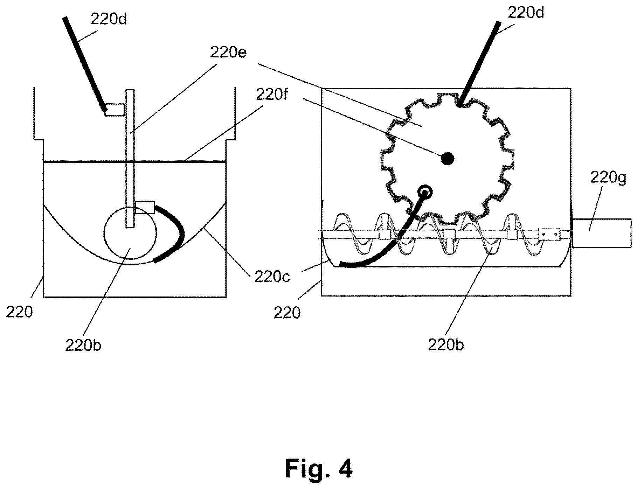

Fig. 4 zeigt eine Vorderansicht (rechts) und eine Seitenansicht (links) einer ersten Zuführeinrichtung 220 nach einer möglichen Ausführung der vorliegenden Erfindung.

Die erste Zuführeinrichtung 220 weist eine Schütte 220a (in Fig. 4 nicht gezeigt), eine Förderschnecke 220b, einen Innenboden 220c, ein biegbares Rührelement 220d, ein Antriebsrad 220e des Rührelements 220d, eine Achse 220f des Antriebsrades 220e sowie eine Antriebseinrichtung 220g der Förderschnecke 220a auf.

Das Antriebsrad 220e rotiert um die Achse 220f, welche an einem Element der ersten Zuführeinrichtung 220, insbesondere drehbar, gelagert ist. Das Antriebsrad 220e steht in Eingriff mit der Förderschnecke 220b, sodass das Antriebsrad 220e von der Förderschnecke 220b angetrieben wird, welche durch die Antriebseinrichtung 220g in Rotation versetzt wird. An dem Antriebsrad 220e ist in wenigstens einer radialen Ausdehnungsrichtung ein Rührelement 220d, insbesondere aufweisend einen biegbaren Stab, insbesondere Metallstab, oder einen Federstab, angeordnet. Durch die Bewegung des Antriebsrades 220e wird das Rührelement 220d innerhalb des ersten Behälters 200 und/oder innerhalb der ersten Zuführeinrichtung 220 bewegt, um das rieselfähige Substrat aufzulockern und/oder aus den Ecken heraus und/oder vom Innenboden 220c herauf der Förderschnecke 220b zuzuführen.

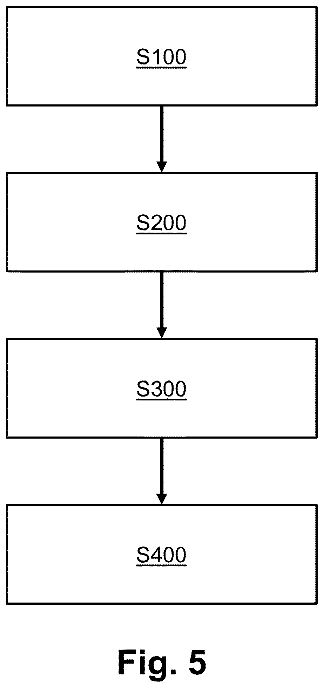

Fig. 5 zeigt ein Flussdiagramm des offenbarungsgemäßen Verfahrens zur Zubereitung des Getränks, insbesondere des proteinhaltigen Mischgetränks, und insbesondere zur Durchführung in der Vorrichtung 1 der oben beschriebenen Art, aufweisend die folgenden Schritte:
In Schritt S100 werden die Trägerflüssigkeit 410, das rieselfähige Substrat 210 und das wenigstens im Wesentlichen flüssige Substrat 310 bereitgestellt.
In Schritt S200 werden die Trägerflüssigkeit 410, das rieselfähige Substrat 210 und das wenigstens im Wesentlichen flüssige Substrat 310 der Mischeinrichtung 100 zugeführt.
In Schritt S300 werden durch die Mischeinrichtung 100 die Trägerflüssigkeit 410, das rieselfähige Substrat 210 und das wenigstens im Wesentlichen flüssige Substrat 310 zu dem, insbesondere wenigstens im Wesentlichen homogenen, Getränk vermischt.
In Schritt S400 wird das, insbesondere wenigstens im Wesentlichen homogene, Getränk abgegeben.

Bei dem hier beschriebenen Verfahren ist es möglich, insbesondere wenigstens, die Schritte S200 und S300 sequentiell oder parallel oder in Teilschritten wechselweise oder in beliebiger Kombination auszuführen.

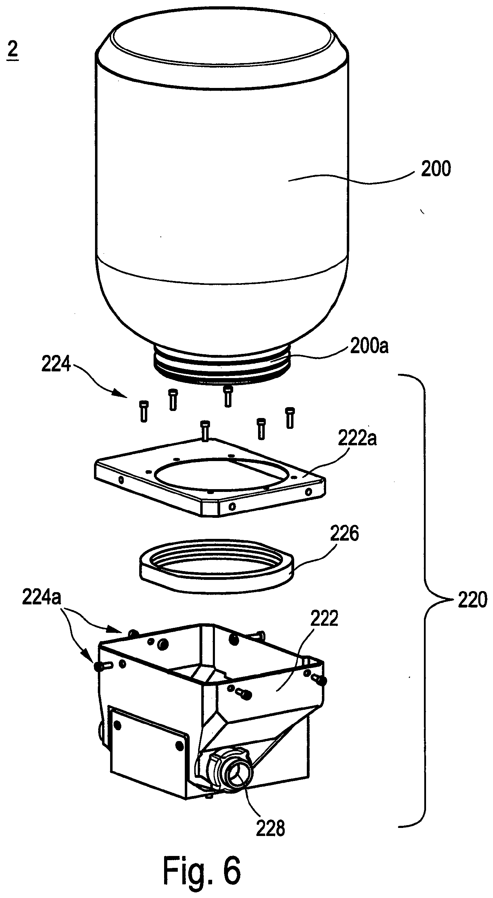

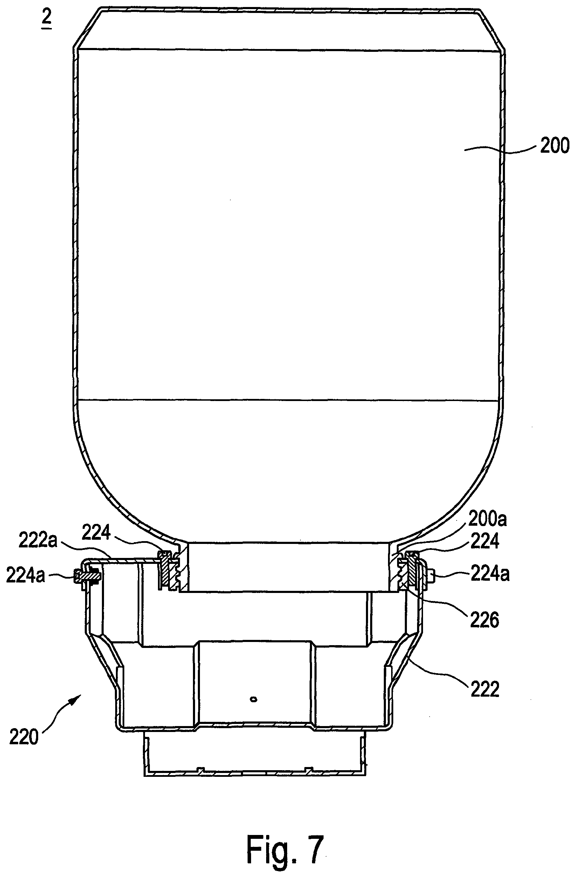

Fig. 6 zeigt eine Explosionsdarstellung einer Ausführungsform einer Vorrichtung zur Bevorratung und Zuführung eines rieselfähigen Substrats 2, welche in Fig. 7 in einer Schnittdarstellung im zusammengebauten Zustand gezeigt ist, wobei in beiden Abbildungen jeweils auf die Einblendung einer Schütte bzw. Pulverrutsche 220a verzichtet wurde.

Die Vorrichtung zur Bevorratung und Zuführung eines rieselfähigen Substrats 2 weist einen ersten Behälter 200 und eine erste Zuführeinrichtung 220 auf.

Der erste Behälter 200 weist eine mechanische Schnittstelle 200a in Form eines Außengewindes auf, welches um einen Auslass des ersten Behälters herum angeordnet, insbesondere einteilig mit diesem ausgebildet, ist.

Die erste Zuführeinrichtung 220 weist auf: ein Gehäuse 222, einen Gehäusedeckel 222a, eine mechanische Aufnahme 226 und Befestigungselemente 224, 224a.

Das Gehäuse weist 222 einen Auslass 228 auf, an welchem im eingebauten Zustand eine Pulverrutsche 220a (in Fig. 6 und 7 nicht gezeigt) angeordnet, insbesondere auf- und/oder an- und/oder eingesteckt, ist.

An dem Gehäusedeckel 222a ist eine mechanische Aufnahme 226, insbesondere in Form eines Innengewinderings, angeordnet, insbesondere angeschraubt, insbesondere mittels der Befestigungselemente 224 angeschraubt. Es ist offenkundig, dass die mechanische Aufnahme 226 auch auf andere Weise an dem Gehäusedeckel 222a befestigt sein kann, beispielsweise durch Kleben, Nieten, Schweißen, Löten, Clipsen, Bördeln oder dergleichen. Nach einer anderen, nicht dargestellten Ausführung ist die mechanische Aufnahme 226 einteilig mit dem Gehäusedeckel 222a ausgebildet.

Der Gehäusedeckel 222a wird, insbesondere nachdem dieser mit der mechanischen Aufnahme 226 verbunden wurde, an dem Gehäuse 222 angeordnet, insbesondere angeschraubt, insbesondere mittels der Befestigungselemente 224a angeschraubt. Es ist offenkundig, dass der Gehäusedeckel 222a auch auf andere Weise an dem Gehäuse 222 befestigt sein kann, beispielsweise durch Kleben, Nieten, Schweißen, Löten, Clipsen, Bördeln oder dergleichen.

Der erste Behälter 200 wird mittels seiner mechanischen Schnittstelle, insbesondere lösbar, mit der ersten Zuführeinrichtung 220 in Eingriff gebracht, insbesondere wird der erste Behälter 200 in die erste Zuführeinrichtung 220 eingeschraubt und/oder die erste Zuführeinrichtung 220 wird auf den ersten Behälter 200 aufgeschraubt.

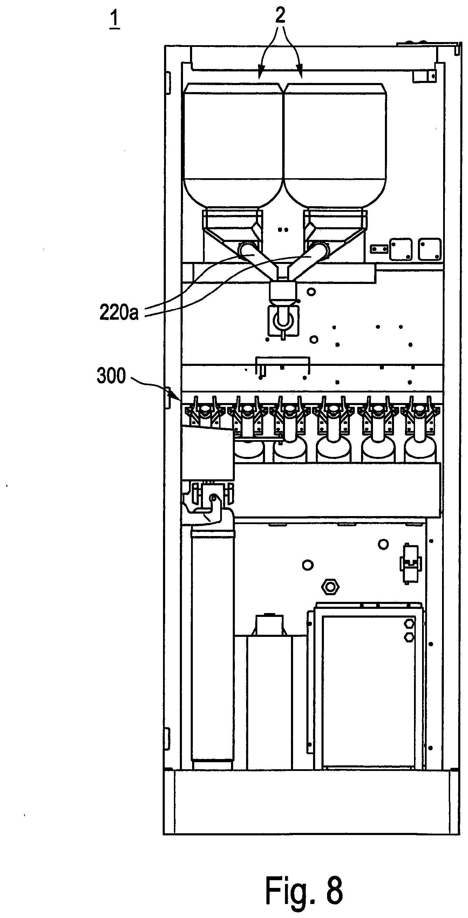

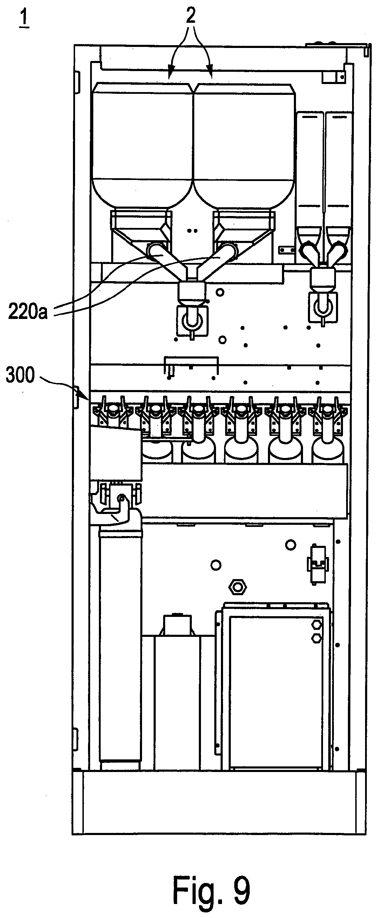

Die Figuren 8 und 9 zeigen jeweils eine schematische Ansicht einer Ausführung des Innenraums der Vorrichtung zur Zubereitung eines Getränks 1. In die Vorrichtung zur Zubereitung eines Getränks 1 sind zwei Vorrichtungen zur Bevorratung und Zuführung eines rieselfähigen Substrats 2 angeordnet. Diese sind jeweils über eine Schütte bzw. Pulverrutsche 220a angeschlossen, insbesondere mit der Mischeinrichtung 100 (in den Figuren 8 und 9 nicht gezeigt) verbunden.

Wie in Fig. 9 gezeigt, können neben den beiden Vorrichtungen zur Bevorratung und Zuführung eines rieselfähigen Substrats 2 in dem Innenraum der Vorrichtung zur Zubereitung eines Getränks 1 weitere rieselfähige Substrate bereitgestellt werden, insbesondere um Nahrungsergänzungsstoffe, insbesondere Vitamin- und/oder Mineralmischungen, oder dergleichen, insbesondere auf Kundenwunsch hin, zuzuführen.

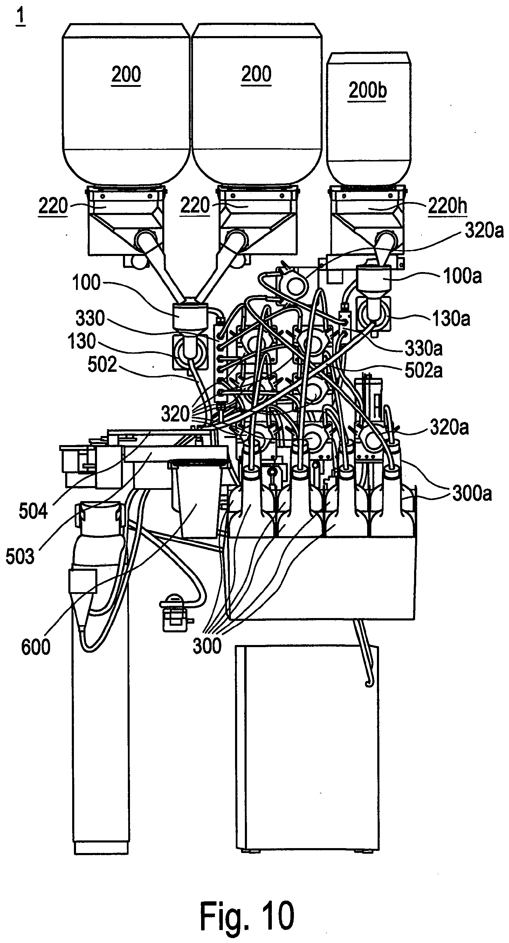

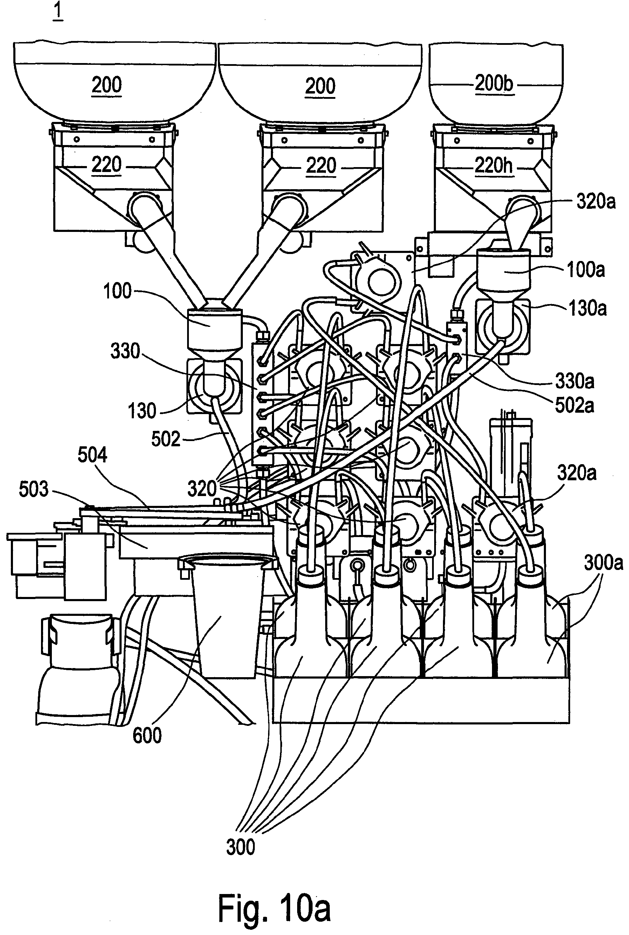

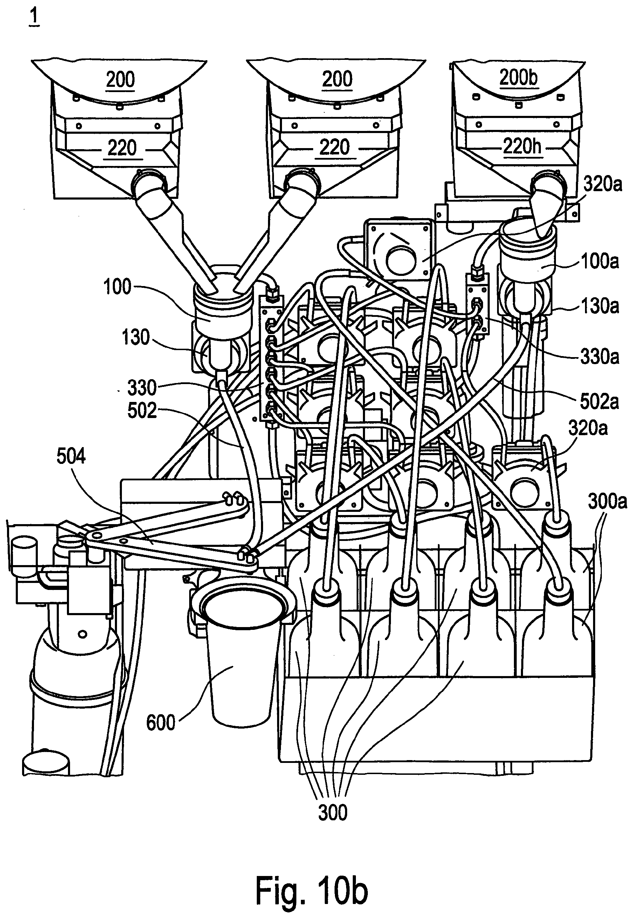

Die Figuren 10 bis 10b zeigen eine schematische Ansicht einer weiteren Ausführung des Innenraums der Vorrichtung zur Zubereitung eines Getränks 1.

Über wenigstens eine der beiden ersten Zuführeinrichtungen 220 wird das rieselfähige Substrat 210 der Mischeinrichtung 100 zugeführt. Über einen Schlauchabschnitt 422 der dritten Zuführeinrichtung 420 wird der Mischeinrichtung 100 die Trägerflüssigkeit 410, insbesondere Wasser oder Milch oder Mischungen derselben, zugeführt. Die Trägerflüssigkeit wird dabei wenigstens im Wesentlichen horizontal an einer Seite des trichterförmigen Sammelabschnitts 110 zugeführt, um in diesem eine strudelartige Flüssigkeitsströmung wenigstens zu begünstigen, insbesondere zu bewirken.

Jeder der zweiten Behälter 300 weist eine eigene zweite Zuführeinrichtung 320, insbesondere in Form einer Pumpe, auf. Nach der Ausführung der Figuren 10 bis 10b leiten die zweiten Zuführeinrichtungen 320 das wenigstens im Wesentlichen flüssige Substrat 310 einer gemeinsamen Dosiereinheit 330 zu, welche in den Schlauchabschnitt 422 der dritten Zuführeinrichtung 420 integriert ist. Mit anderen Worten: Es erfolgt bereits zumindest eine Vorvermischung, insbesondere eine weitgehende Vermischung, insbesondere eine wenigstens im Wesentlichen vollständige Vermischung, von Trägerflüssigkeit 410 und wenigstens einem der wenigstens im Wesentlichen flüssigen Substrate 310 bevor die Trägerflüssigkeit 410 die Mischeinrichtung 100 erreicht.

In dem Mischabschnitt 120 erfolgt die wenigstens im Wesentlichen vollständige Vermischung von rieselfähigem Substrat 210, wenigstens einem wenigstens im Wesentlichen flüssigen Substrat 310 und der Trägerflüssigkeit 410 zu einem Gemisch und wird in den Abgabeabschnitt 130 geleitet.

Mit dem Abgabeabschnitt 130 ist eine Ausgabeeinrichtung 500, insbesondere ein, insbesondere flexibler, Schlauchabschnitt 502 derselben fluidführend verbunden, welcher das Gemisch einem aus der Vorrichtung entnehmbaren Behälter 600 zuleitet.

Die Ausgabeeinrichtung 500 weist ferner einen Schwenkarm 504 auf, an dem das dem Behälter 600 zugewandte Ende des Schlauchabschnitts 502 befestigt ist. Der Schwenkarm 504 verschwenkt vor dem Beginn des Abgabevorganges und/oder nach Beendigung des Abgabevorganges das mit diesem verbundene Ende des Schlauchabschnitts 502 in einer wenigstens im Wesentlichen horizontalen Ebene, um eine Verschmutzung eines Ausgabebereichs in welchem sich der Behälter 600 während der Abgabe befindet, insbesondere durch Tropfenbildung, Vorlauf, Nachlauf und/oder Reinigungsflüssigkeit zu vermeiden. Bevorzugt wird das betreffende Ende des Schlauchabschnitts 502 über eine Auffangeinrichtung 503 bewegt, welche die aufgefangene Flüssigkeit an einen in die Vorrichtung integrierten Behälter und/oder einen Abwasseranschluss abgeben kann.

Wie mit Bezug auf die Fig. 9 bereits erläutert, kann die Vorrichtung ebenfalls wenigstens einen weiteren ersten Behälter 200b aufweisen, in welchem wenigstens ein weiteres rieselfähiges Substrat bereitgestellt wird, insbesondere um Nahrungsergänzungsstoffe, insbesondere Vitamin- und/oder Mineralmischungen, oder dergleichen, insbesondere auf Kundenwunsch hin, zuzuführen. Dies ist in den Figs. 10 bis 10b weiter detailliert dargestellt:
Der weitere erste Behälter 200b der Ausführungsform der Figs. 10 bis 10b ist über eine weitere, insbesondere eigene, erste Zuführeinrichtung 220h mit einer weiteren, insbesondere eigenen, Mischeinrichtung 100a auf die oben beschriebene Weise substratführend verbunden. Der weiteren Mischeinrichtung 100a sind weitere zweite Behälter 300a mit weiteren wenigstens im Wesentlichen flüssigen Substraten 310a, insbesondere exklusiv, zugeordnet.

Wie oben beschrieben weist jeder der weiteren zweiten Behälter 300a eine weitere, insbesondere eigene, zweite Zuführeinrichtung 320a, insbesondere in Form einer Pumpe, auf. Nach der Ausführung der Figuren 10 bis 10b leiten die weiteren zweiten Zuführeinrichtungen 320a das weitere wenigstens im Wesentlichen flüssige Substrat 310a einer weiteren gemeinsamen Dosiereinheit 330a zu, welche in einen weiteren Schlauchabschnitt 422a einer weiteren dritten Zuführeinrichtung 420a integriert ist. Mit anderen Worten: Es erfolgt auch im Zusammenhang mit dem weiteren rieselfähigen Substrat bereits zumindest eine Vorvermischung, insbesondere eine weitgehende Vermischung, insbesondere eine wenigstens im Wesentlichen vollständige Vermischung, von Trägerflüssigkeit 410 und wenigstens einem der weiteren wenigstens im Wesentlichen flüssigen Substrate 310a bevor die Trägerflüssigkeit 410 die weitere Mischeinrichtung 100a erreicht.

Die weitere Mischeinrichtung 100a entspricht baulich und funktional wenigstens im Wesentlichen der oben beschriebenen Mischeinrichtung 100, sodass die diesbezüglichen Ausführungen auch für die weitere Mischeinrichtung 100a gelten.

Mit dem weiteren Abgabeabschnitt 130a ist die Ausgabeeinrichtung 500, insbesondere ein weiterer, insbesondere flexibler, Schlauchabschnitt 502a derselben fluidführend verbunden, welcher das Gemisch dem aus der Vorrichtung entnehmbaren Behälter 600 zuleitet.

Der weitere Schlauchabschnitt 502a ist ebenfalls an dem Schwenkarm 504 befestigt und wird zusammen mit dem Schlauchabschnitt 502 vor dem Beginn des Abgabevorganges und/oder nach Beendigung des Abgabevorganges verschwenkt, um auf die oben beschriebene Weise eine Verschmutzung des Ausgabebereichs zu vermeiden.

Der Fig. 10b, welche eine geneigte Ansicht der Fig. 10a ist, ist insbesondere zu entnehmen, wie die Dosiereinheit 330 bzw. die weitere Dosiereinheit 330a in die eine Komponente der dritten Zuführeinrichtung 420 bzw. der weiteren dritten Zuführeinrichtung 420a , insbesondere einen Schlauchabschnitt derselben, integriert ist.

Des Weiteren ist der Fig. 10b das Verschwenken des Schwenkarms 504 zu entnehmen, von der vorderen Abgabeposition zu der hinteren, angedeuteten Reinigungs- und/oder Ruheposition und zurück.

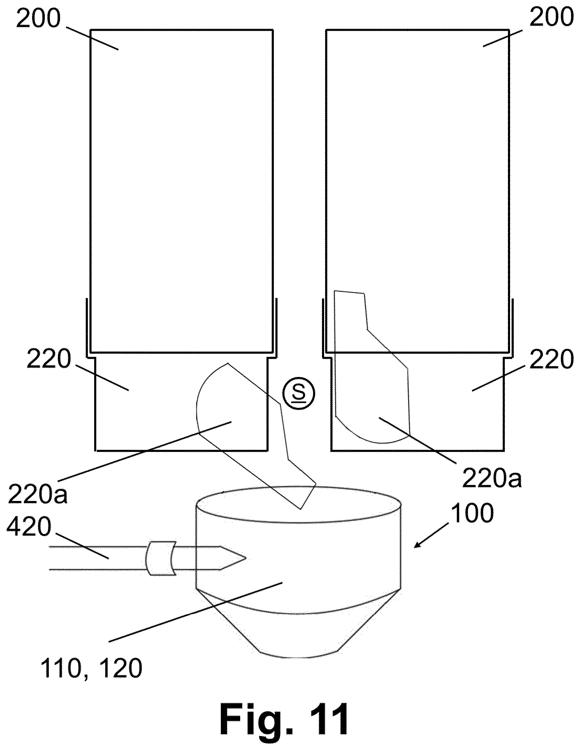

Fig. 11 zeigt eine stark schematisierte Ansicht eines Teils einer weiteren Ausführungsform der hier beschriebenen offenbarungsgemäßen Vorrichtung. Wie oben bereits in Bezug auf die Figuren 2 und 3 erläutert, kann die Schütte 220a schwenkbar an der ersten Zuführeinrichtung 220 angeordnet sein, um beispielsweise einen Verschlussmechanismus für den oben beschriebenen Auffüllvorgang bereitzustellen. Bei diesem Verschwenken der Schütte 220a von einer Schließstellung (s. Fig. 11, rechts) in eine Offenstellung (s. Fig. 11, links) kann bereits eine Quantität rieselfähigen Substrats 210 ungewollt in den Sammelabschnitt 110 und/oder den Mischabschnitt 120 gelangen, was zu einem Verstopfen des Mischabschnitts 120 führen kann. Deshalb sieht diese Ausführungsform eine Sensoreinrichtung S, insbesondere in Form eines optischen Induktionsschalters, vor, welcher ein entsprechendes Verschwenken der Schütte 220a detektiert, woraufhin ein Spülvorgang, insbesondere mittels der dritten Zuführeinrichtung 420, welche die Trägerflüssigkeit 410, insbesondere Wasser, bereitstellt, initiiert wird, um ein Verstopfen wenigstens im Wesentlichen zu vermeiden, insbesondere zu verhindern.

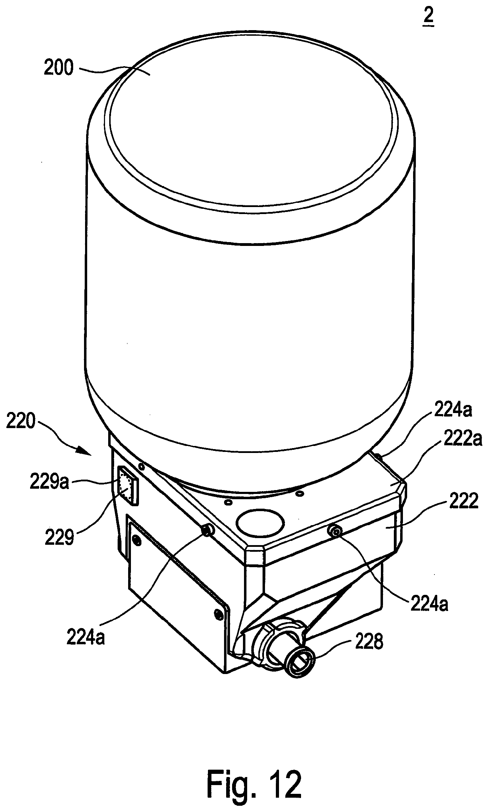

Fig. 12 zeigt eine schematisierte Ansicht einer weiteren Ausführung der Vorrichtung zur Bevorratung und Zuführung eines rieselfähigen Substrats 2. Insbesondere mit Bezug auf die Figuren 6 und 7 wurde bereits der Aufbau der Vorrichtung zur Bevorratung und Zuführung eines rieselfähigen Substrats 2 erläutert, weshalb zur Vermeidung von Wiederholungen lediglich auf die obigen Ausfürhungen verwiesen sei, welche für die vorliegende Ausführungsform in gleicher Weise gelten, *mutatis mutandis.*

Die Ausführungsform der Fig. 12 weist zusätzlich an einer Seite des Gehäuses **222** der ersten Zuführeinrichtung **220** eine Öffnung **229** (in Fig. 12 gestrichelt dargestellt) auf. Sie ist dafür vorgesehen, insbesondere eingerichtet, insbesondere im ausgebauten Zustand, in der Zuführeinrichtung **220** befindliches rieselfähiges Substrat **210** wenigstens im Wesentlichen vollständig aus der Zuführeinrichtung **220** abzuführen. Zur Vermeidung des Eindringens von Schmutz und/oder Feuchtigkeit kann die Öffnung 229 zumindest zeitweise und/oder teilweise mit einem Deckel **229a** verschlossen sein, insbesondere wenn sich die Vorrichtung zur Bevorratung und Zuführung eines rieselfähigen Substrats 2 in Einbaulage innerhalb der Vorrichtung 1 zur Zubereitung eines Getränks, insbesondere zur Zubereitung eines proteinhaltigen Mischgetränks, befindet.

### Referenzzeichenliste

- 1: Vorrichtung zur Zubereitung eines Getränks, insbesondere zur Zubereitung eines proteinhaltigen Mischgetränks

- 2: Vorrichtung zur Bevorratung und Zuführung eines rieselfähigen Substrats

- 100: Mischeinrichtung
- 100a: weitere Mischeinrichtung
- 110: Sammelabschnitt
- 120: Mischabschnitt
- 125: Mischkörper
- 130: Abgabeabschnitt
- 130a: weiterer Abgabeabschnitt
- 200: erster Behälter
- 200a: mechanische Schnittstelle
- 200b: weiterer erster Behälter
- 210: rieselfähiges Substrat
- 220: erste Zuführeinrichtung
- 220a: Schütte
- 220b: Förderschnecke
- 220c: Innenboden
- 220d: Rührelement
- 220e: Antriebsrad des Rührelements
- 220f: Achse des Antriebsrads
- 220g: Antriebseinrichtung
- 220h: weitere erste Zuführeinrichtung
- 222: Gehäuse
- 222a: Gehäusedeckel
- 224: Befestigungselement
- 224a: Befestigungselement
- 226: mechanische Aufnahme
- 228: Auslass
- 229: Öffnung
- 229a: Deckel
- 300: zweiter Behälter
- 300a: weiterer zweiter Behälter
- 310: wenigstens im Wesentlichen flüssiges Substrat
- 310a: weiteres wenigstens im Wesentlichen flüssiges Substrat
- 320: zweite Zuführeinrichtung
- 320a: weitere zweite Zuführeinrichtung
- 330: Dosiereinheit
- 330: weitere Dosiereinheit
- 400: Vorratsbehälter
- 410: Trägerflüssigkeit
- 420: dritte Zuführeinrichtung
- 420a: weitere dritte Zuführeinrichtung
- 422: Rohr- oder Schlauchabschnitt
- 422a: weiterer Rohr- oder Schlauchabschnitt
- 500: Ausgabeeinrichtung
- 502: Rohr- oder Schlauchabschnitt
- 502a: weiterer Rohr- oder Schlauchabschnitt
- 503: Auffangeinrchtung
- 504: Schwenkarm
- 600: aus bzw. von der Vorrichtung entfernbarer Behälter

- S: Sensoreinrichtung

- S100: Bereitstellen
- S200: Zuführen
- S300: Vermischen
- S400: Abgeben

## Patentansprüche

1. Vorrichtung **(2)** zur Bevorratung und Zuführung eines rieselfähigen Substrats, insbesondere zur Verwendung in einer Vorrichtung zur Zubereitung eines Getränks, aufweisend:
wenigstens einen ersten Behälter **(200)** zur Bevorratung eines rieselfähigen Substrats **(210),** wobei der erste Behälter **(200)** eine mechanische Schnittstelle **(200a)** aufweist;
wenigstens eine, insbesondere modular ausgebildete, erste Zuführeinrichtung **(220),** welche dafür vorgesehen ist, einer Mischeinrichtung **(100)** das rieselfähige Substrat **(210)** aus einem der ersten Behälter **(200)** zuzuführen,
wobei die erste Zuführeinrichtung **(220)** aufweist:
ein Gehäuse **(222);**
eine mechanische Aufnahme **(226),** welche in und/oder an dem Gehäuse **(222)** angeordnet ist und welche mit der mechanischen Schnittstelle **(226)** des ersten Behälters **(200)** verbunden ist, insbesondere in Eingriff steht; und
eine passive Fördereinrichtung, welche an und/oder in dem Gehäuse **(222)** angeordnet ist, insbesondere aufgesteckt ist und welche dafür vorgesehen ist, der Mischeinrichtung **(100)** rieselfähiges Substrat, insbesondere eine definierte Menge desselben, zuzuführen; **dadurch gekennzeichnet, dass** die erste Zuführeinrichtung weiter eine aktive Fördereinrichtung aufweist, welche wenigstens teilweise innerhalb des Gehäuses **(222)** angeordnet ist und welche dafür vorgesehen ist, der passiven Fördereinrichtung rieselfähiges Substrat **(210),** insbesondere eine definierte Menge desselben, zuzuführen,
wobei die aktive Fördereinrichtung eine Komponente aufweist, insbesondere in Form einer Komponente gebildet ist, welche ausgewählt ist aus einer Gruppe, welche eine Schlauchpumpe und/oder eine pneumatische Fördereinrichtung, insbesondere eine Saugfördereinrichtung, eine Vakuumfördereinrichtung und/oder eine Gebläseeinrichtung, aufweist.

2. Vorrichtung zur Bevorratung und Zuführung eines rieselfähigen Substrats nach Anspruch 1,
wobei die passive Fördereinrichtung eine Komponente aufweist, insbesondere in Form einer Komponente gebildet ist, welche ausgewählt ist aus einer Gruppe, welche eine Pulverrutsche, eine Schütte, einen Schlauchabschnitt, und/oder einen Rohrabschnitt aufweist.

3. Vorrichtung zur Bevorratung und Zuführung eines rieselfähigen Substrats nach einem der vorhergehenden Ansprüche, wobei das wenigstens eine rieselfähige Substrat **(210)** ein wenigstens im Wesentlichen proteinhaltiges Substrat ist.

4. Vorrichtung zur Bevorratung und Zuführung eines rieselfähigen Substrats nach Anspruch 3, wobei das rieselfähige Substrat **(210)** eine Proteinkonzentration aufweist von wenigstens 20 Gew.-%, bevorzugt wenigstens 60 Gew.-%, weiter bevorzugt wenigstens 70 Gew.-% und am meisten bevorzugt eine Proteinkonzentration aufweist im Bereich von 70 Gew.-% bis 100 Gew.-%.

5. Vorrichtung zur Bevorratung und Zuführung eines rieselfähigen Substrats nach einem der vorhergehenden Ansprüche, wobei das wenigstens eine rieselfähige Substrat **(210)** eine wenigstens im Wesentlichen gleichbleibende Geschmacksgrundlage bereitstellt.

6. Vorrichtung zur Bevorratung und Zuführung eines rieselfähigen Substrats nach einem der vorhergehenden Ansprüche, wobei die erste Zuführeinrichtung **(220)** an einer Seite des Gehäuses **(222)** eine, insbesondere mit einem Deckel **(229a)** verschließbare, Öffnung **(229)** aufweist, welche dafür eingerichtet ist, insbesondere im ausgebauten Zustand, in der Zuführeinrichtung **(220)** befindliches rieselfähiges Substrat **(210)** wenigstens im Wesentlichen vollständig aus der Zuführeinrichtung **(220)** abzuführen.

7. Vorrichtung zur Bevorratung und Zuführung eines rieselfähigen Substrats nach einem der vorhergehenden Ansprüche, wobei die erste Zuführeinrichtung **(220)** auf den ersten Behälter **(200)** aufgeschraubt ist oder der erste Behälter **(200)** auf die erste Zuführeinrichtung **(220)** aufgeschraubt ist.

8. Verfahren zur Montage einer Vorrichtung zur Bevorratung und Zuführung eines rieselfähigen Substrats nach einem der vorhergehenden Ansprüche, und zum Einbau derselben in eine Vorrichtung zur Zubereitung eines Getränks, insbesondere zur Zubereitung eines proteinhaltigen Mischgetränks, aufweisend die Schritte:
mechanisches Verbinden des ersten Behälters **(200)** zur Bevorratung des rieselfähigen Substrats **(210)** mit der, insbesondere modular ausgebildeten, ersten Zuführeinrichtung **(220),** welche dafür vorgesehen ist, der Mischeinrichtung **(100)** das rieselfähige Substrat **(210)** aus einem der ersten Behälter **(200)** zuzuführen;
Einsetzen eines Zusammenbaus, aufweisend den ersten Behälter **(200)** und die erste Zuführeinrichtung **(210)** in die Vorrichtung zur Zubereitung eines Getränks;
Anbringen, insbesondere Aufstecken und/oder Einstecken, der passiven Fördereinrichtung an der ersten Zuführeinrichtung **(210)** zur Verbindung des Zusammenbaus mit der Vorrichtung zur Zubereitung eines Getränks, insbesondere zur Zubereitung eines proteinhaltigen Mischgetränks.

## Claims

1. An apparatus **(2)** for storing and supplying a pourable substrate, in particular for use in an apparatus for preparing a beverage, comprising:
at least a first container **(200)** for storing a pourable substrate **(210),** wherein the first container **(200)** comprises a mechanical interface **(200a)**;
at least a first supply device **(220)**, in particular a first supply device **(220)** which is of a modular construction, which is provided in order to supply the pourable substrate **(210)** from one of the first containers **(200)** to a mixing device **(100)**,
wherein the first supply device **(220)** comprises :
a housing **(222)**;
a mechanical seating **(226)**, which is arranged in and/or on the housing **(222)** and which is connected to the mechanical seating **(226)** of the first container **(200)**, and in particular is in engagement with the mechanical seating **(226)** of the first container **(200)**; and
a passive conveyor device which is arranged on and/or in the housing **(222)**, and which in particular is attached onto the same, and which is provided in order to supply the pourable substrate, in particular a defined quantity of the same, to the mixing device **(100)**;
**characterised in that** the first supply device further comprises an active conveyor device, which is arranged at least partially within the housing **(222)** and which is provided in order to supply the pourable substrate **(210)**, in particular a defined quantity of the same, to the passive conveyor device,
wherein the active conveyor device comprises a component, and is in particular constructed in the form of a component, which is selected from a group which comprises a peristaltic pump and/or a pneumatic conveyor device, in particular a suction conveyor device, a vacuum conveyor device and/or a blower device.

2. The apparatus for storing and supplying a pourable substrate according to claim 1,
wherein the passive conveyor device comprises a component, in particular wherein the passive conveyor device is constructed in the form of a component, which is selected from a group which comprises a powder chute, a chute, a portion of a hose, and/or a portion of a pipe.

3. The apparatus for storing and supplying a pourable substrate according to any one of the preceding claims, wherein the at least one pourable substrate **(210)** is a substrate containing at least substantially protein.

4. The apparatus for storing and supplying a pourable substrate according to claim 3, wherein the pourable substrate **(210)** has a protein concentration of at least 20 % by weight, preferably at least 60 % by weight, more preferably at least 70 % by weight, and which most preferably has a protein concentration in a range from 70 % by weight to 100 % by weight.

5. The apparatus for storing and supplying a pourable substrate according to any one of the preceding claims, wherein the at least one pourable substrate **(210)** provides an at least substantially consistent flavour base.

6. The apparatus for storing and supplying a pourable substrate according to any one of the preceding claims, wherein the first supply device **(220)** has, on one side of the housing **(222)**, an opening **(229a)**, in particular an opening **(229a)** that can be closed by means of a lid **(229a)**, which opening **(229)** is arranged, in particular when the supply device **(220)** has been removed, to discharge from the supply device **(220)**, at least substantially completely, any of the pourable substrate **(210)** that is located in the supply device **(220)**.

7. The apparatus for storing and supplying a pourable substrate according to any one of the preceding claims, wherein the first supply device **(220)** is screwed onto the first container **(200)**, or the first container **(200)** is screwed onto the first supply device **(220)**.

8. A method of assembling an apparatus for storing and supplying a pourable substrate according to any one of the preceding claims, and for installing the same in an apparatus for preparing a beverage, in particular in an apparatus for preparing a protein-containing mixed beverage, comprising the steps of:
mechanically connecting the first container **(200)** for storing the pourable substrate **(210)** to the first supply device **(220)**, in particular to the first supply device **(220)** which is of a modular construction, which is provided in order to supply the pourable substrate **(210)** from one of the first containers **(200)** to the mixing device **(100)**;
inserting an assembly which comprises the first container **(200)** and the first supply device **(210)** into the apparatus for preparing a beverage;
installing the passive conveyor device, in particular by attaching the passive conveyor device onto, or by inserting the passive conveyor device into, the first supply device **(210)** in order to connect the assembly to the apparatus for preparing a beverage, in particular to the apparatus for preparing a protein-containing mixed beverage.

## Revendications

1. Dispositif **(2)** pour le stockage et l'alimentation d'un substrat fluide, en particulier pour l'utilisation dans un dispositif pour la préparation d'une boisson, comportant :
au moins un premier récipient **(200)** pour le stockage d'un substrat fluide **(210)**, dans lequel le premier récipient **(200)** comporte une interface mécanique **(200a)** ;
au moins un premier dispositif d'alimentation **(220)**, en particulier conçu de manière modulaire, lequel est prévu pour alimenter un dispositif de mélange **(100)** en substrat fluide **(210)** provenant de l'un des premiers récipients **(200)**, dans lequel le premier dispositif d'alimentation **(220)** comporte :
un boîtier **(222)** ;
un logement mécanique **(226)**, lequel est agencé dans le boîtier **(222)** et/ou sur celui-ci et lequel est connecté à l'interface mécanique **(200)** du premier récipient **(226)**, en particulier est en prise avec celle-ci ; et
un dispositif de transport passif, lequel est agencé sur le boîtier **(222)** et/ou dans celui-ci, en particulier est emboîté, et lequel est prévu pour alimenter le dispositif de mélange **(100)** en substrat fluide, en particulier en une quantité définie de celui-ci ; **caractérisé en ce que** le premier dispositif d'alimentation comporte en outre un dispositif de transport actif, lequel est agencé au moins partiellement à l'intérieur du boîtier **(222)** et lequel est prévu pour alimenter le dispositif de transport passif en substrat fluide **(210)**, en particulier en une quantité définie de celui-ci, dans lequel le dispositif de transport actif comporte un composant, en particulier est formé sous la forme d'un composant, lequel est choisi dans un groupe, lequel comporte une pompe péristaltique et/ou un dispositif de transport pneumatique, en particulier un dispositif de transport par aspiration, un dispositif de transport sous vide et/ou un dispositif de soufflante.

2. Dispositif pour le stockage et l'alimentation d'un substrat fluide selon la revendication 1,
dans lequel le dispositif de transport passif comporte un composant, en particulier est formé sous la forme d'un composant, lequel est choisi dans un groupe, lequel comporte une goulotte à poudre, un déversoir, une section de tuyau souple, et/ou une section de tuyau rigide.

3. Dispositif pour le stockage et l'alimentation d'un substrat fluide selon l'une quelconque des revendications précédentes, dans lequel l'au moins un substrat fluide **(210)** est un substrat au moins sensiblement contenant des protéines.

4. Dispositif pour le stockage et l'alimentation d'un substrat fluide selon la revendication 3, dans lequel le substrat fluide **(210)** présente une concentration en protéines d'au moins 20 % en poids, de préférence d'au moins 60 % en poids, de préférence encore d'au moins 70 % en poids et de la manière la plus préférée présente une concentration en protéines dans la plage de 70 % en poids à 100 % en poids.

5. Dispositif pour le stockage et l'alimentation d'un substrat fluide selon l'une quelconque des revendications précédentes, dans lequel l'au moins un substrat fluide **(210)** fournit une base de goût au moins sensiblement constante.

6. Dispositif pour le stockage et l'alimentation d'un substrat fluide selon l'une quelconque des revendications précédentes, dans lequel le premier dispositif d'alimentation **(220)** comporte, sur un côté du boîtier **(222)**, une ouverture **(229)**, en particulier apte à être fermée par un couvercle **(229a)**, laquelle est conçue pour évacuer au moins sensiblement complètement hors du dispositif d'alimentation **(220)**, en particulier à l'état démonté, le substrat fluide **(210)** se trouvant dans le dispositif d'alimentation **(220)**.

7. Dispositif pour le stockage et l'alimentation d'un substrat fluide selon l'une quelconque des revendications précédentes, dans lequel le premier dispositif d'alimentation **(220)** est vissé sur le premier récipient **(200)** ou le premier récipient **(200)** est vissé sur le premier dispositif d'alimentation **(220)**.

8. Procédé pour le montage d'un dispositif pour le stockage et l'alimentation d'un substrat fluide selon l'une quelconque des revendications précédentes, et pour l'installation de celui-ci dans un dispositif pour la préparation d'une boisson, en particulier pour la préparation d'une boisson mélangée contenant des protéines, comportant les étapes suivantes :
la liaison mécanique du premier récipient **(200)** pour le stockage du substrat fluide **(210)** avec le premier dispositif d'alimentation **(220)**, en particulier conçu de manière modulaire, lequel est prévu pour alimenter le dispositif de mélange **(100)** en substrat fluide **(210)** provenant de l'un des premiers récipients **(200)** ;
l'insertion d'un assemblage, comportant le premier récipient **(200)** et le premier dispositif d'alimentation **(210)**, dans le dispositif pour la préparation d'une boisson ;
le montage, en particulier l'emboîtement et/ou l'insertion, du dispositif de transport passif sur le premier dispositif d'alimentation **(210)** pour la liaison de l'assemblage avec le dispositif pour la préparation d'une boisson, en particulier pour la préparation d'une boisson mélangée contenant des protéines.
